# EUROPÄISCHE PATENTANMELDUNG

(11) **EP 2 963 382 A1**
(43) Veröffentlichungstag der Anmeldung: **06.01.2016**
(21) Anmeldenummer: 15173050.4
(22) Anmeldetag: 22.06.2015
(51) Int. Cl.: G01B 11/27

(54) **VERFAHREN ZUM ERMITTELN DER AUSRICHTUNG EINES LASERLICHTSTRAHLS IN BEZUG AUF EINE DREHACHSE EINER EINRICHTUNG, DIE UM DIE DREHACHSE ROTIERBAR IST, UND LASERLICHT-ERFASSUNGSEINRICHTUNG**

(30) Priorität: 02.07.2014 DE 102014212797
(71) Anmelder: Prüftechnik Dieter Busch AG, 85737 Ismaning (DE)
(72) Erfinder: Lenz, Johann, 85737 Ismaning (DE)

(57) **Zusammenfassung**

Die Erfindung betrifft ein Verfahren zum Ermitteln der Ausrichtung eines Laserlichtstrahls (10) in Bezug auf eine Drehachse (12) einer Einrichtung (14), die um die Drehachse (12) rotierbar ist, wobei die Ausrichtung mittels einer Laserlicht-Erfassungseinrichtung (16) ermittelt wird und wobei das Verfahren die Schritte A bis D umfasst. Ferner betrifft die Erfindung eine Laserlicht-Erfassungseinrichtung (16).

## Beschreibung

Die vorliegende Erfindung betrifft ein Verfahren zum Ermitteln der Ausrichtung eines Laserlichtstrahls in Bezug auf eine Drehachse einer Einrichtung, die um die Drehachse rotierbar ist, wobei die Ausrichtung mittels einer Laserlicht-Erfassungseinrichtung ermittelt wird, und eine Laserlicht-Erfassungseinrichtung.

Bekannte Verfahren und Laserlicht-Erfassungseinrichtungen zum Ermitteln der Ausrichtung eines Laserlichtstrahls in Bezug auf eine Drehachse einer um diese rotierbaren Einrichtung, wie einer Walze oder einer Welle, dienen insbesondere dazu die Ausrichtung der Drehachse zu einer Referenzrichtung bzw. einer Referenzachse zu ermitteln, die auch parallel zu dem Laserlichtstrahl verlaufen oder mit diesem fluchten kann. Insbesondere kann auf der Grundlage derartiger Verfahren z:B. die Ausrichtung der Walzen eines Walzwerks zueinander bestimmt werden, um ggf. vorhandene Abweichungen von einer erwünschten parallelen Ausrichtung der Drehachsen der Walzen zu erkennen. So ist z.B. aus der EP 0 518 572 A2 bekannt, bei einer aus mehreren Walzen bestehenden Anordnung wenigstens einen Laserlichtsensor am Umfang wenigstens einer der Walzen bzw. mit radialem Walzen-Abstand bzw. mit sich rechtwinkelig zur Drehachse bemessenden Abstand zu der Walze an dieser anzubringen bzw. anzuordnen. Ein derartige Anordnungsweise von Laserlichtsensors an einer Walze bzw. Welle ist z.B. auch aus der DE 39 11 307 A1 bekannt. Der Ermittlung der Ausrichtung eines Laserlichtstrahls bei dieser Anordnungsweise sind jedoch dann Grenzen gesetzt, wenn diese infolge baulicher Gegebenheiten nicht möglich ist. Man denke hierbei z.B. an eine Walzanlage deren Walzen von einer Schutzabdeckung derart umgeben sind, dass die Mantelfläche der Walzen von außerhalb der Walzenanlage nicht zugänglich ist. Fern gibt es Walzenanlagen - z.B. in der Papierindustrie - die teilweise oder zur Gänze eingehaust sind bzw. deren Walzen sehr eng zueinander angeordnet sind oder deren Walzenoberfäche zum Ansetzen der Laserlichtsensoren z.B. infolge einer konischer Ausbildung der Walzen oder z.B. infolge einer gummierten oder verschlossenen oder zu kleinen Ausbildung der Walzenoberfläche nicht geeignet ist

Weitere Verfahren zum Ermitteln der Ausrichtung von Einrichtungen auf der Grundlage von Lasern und/oder Detektoren sind z.B. aus der DE 10 2008 035 480 A1, der DE 101 09 462 A1, der DE 10 2009 026 836 A1, der DE 10 2011 078 623 A1, der DE 10 2007 041 750 A1, der EP 0 474 799 B1, der US 3,923,402 und der DE 38 14 466 A1 bekannt. Ein Verfahren zum Ermitteln der Ausrichtung von Einrichtungen auf der Grundlage einer Messvorrichtung und einer Zielmarke ist z.B. aus der DE 10 2004 004 412 A1 bekannt.

### Zugrundeliegende Aufgabe

Es ist Aufgabe der Erfindung, ein Verfahren zum Ermitteln der Ausrichtung eines Laserlichtstrahls in Bezug auf eine Drehachse einer Einrichtung und eine Laserlicht-Erfassungseinrichtung anzugeben, mit welchen die Ausrichtung auch dann zuverlässig ermittelt werden kann, wenn nur eine eingeschränkte Zugänglichkeit zu der Einrichtung vorliegt.

Diese Aufgabe wird erfindungsgemäß mit einem Verfahren mit den Merkmalen des Anspruchs 1 und mit einer Laserlicht-Erfassungseinrichtung mit den Merkmalen des Anspruchs 7 gelöst.

Bei dem erfindungsgemäßen Verfahren zum Ermitteln der Ausrichtung eines Laserlichtstrahls in Bezug auf eine Drehachse einer Einrichtung, die um die Drehachse rotierbar bzw. drehbar ist, wird die Ausrichtung mittels einer Laserlicht-Erfassungseinrichtung ermittelt.

Die Laserlicht-Erfassungseinrichtung umfasst einen ersten Laserlicht-Sensor mit einem ersten ebenen Messfeld, einen zweiten Laserlicht-Sensor mit einem zweiten ebenen Messfeld und einen Strahlungsteiler.

Das erste Messfeld weist ein Koordinatensystem mit einer X1-Koordinatenachse und einer zu der X1-Koordinatenachse rechtwinkeligen Y1-Koordinatenachse auf bzw. die Ebene des ersten Messfelds wird von einer X1-Koordinatenachse und einer zu der X1-Koordinatenachse rechtwinkeligen Y1-Koordinatenachse eines Koordinatensystems aufgespannt, wobei der erste Laserlicht-Sensor dazu eingerichtet ist, die X1-Koordinate und Y1-Koordinate eines Laserlicht-Flecks eines auf das erste Messfeld auftreffenden Laserlichtstrahls auf dem ersten Messfeld zu erfassen bzw. wobei der erste Laserlicht-Sensor dazu eingerichtet ist, die X1-Koordinate und Y1-Koordinate eines Laserlicht-Flecks auf dem ersten Messfeld zu erfassen, welcher sich beim Bestrahlen des ersten Messfelds mit einem Laserlichtstrahl auf dem ersten Messfeld ausbildet.

Das zweite Messfeld weist ein Koordinatensystem mit einer X2-Koordinatenachse und einer zu der X2-Koordinatenachse rechtwinkeligen Y2-Koordinatenachse auf bzw. die Ebene des zweiten Messfelds wird von einer X2-Koordinatenachse und einer zu der X2-Koordinatenachse rechtwinkeligen Y2-Koordinatenachse eines Koordinatensystems aufgespannt, wobei der zweite Laserlicht-Sensor dazu eingerichtet ist, die X2-Koordinate und Y2-Koordinate eines Laserlicht-Flecks eines auf das zweite Messfeld auftreffenden Laserlichtstrahls auf dem zweiten Messfeld zu erfassen bzw. wobei der zweite Laserlicht-Sensor dazu eingerichtet ist, die X2-Koordinate und Y2-Koordinate eines Laserlicht-Flecks auf dem zweiten Messfeld zu erfassen, welcher sich beim Bestrahlen des zweiten Messfelds mit einem Laserlichtstrahl auf dem zweiten Messfeld ausbildet.

Die Y2-Koordinatenachse des zweiten Messfelds ist parallel zur Y1-Koordinatenachse des ersten Messfelds ausgerichtet bzw. orientiert und/oder die die X2-Koordinatenachse des zweiten Messfelds ist parallel zur X1-Koordinatenachse des ersten Messfelds ausgerichtet bzw. orientiert.

Der Strahlungsteiler weist eine ebene Eintrittsfläche bzw. eine ebene Einstrahlfläche und eine zu dieser parallele Austrittsfläche aufweist, wobei die Eintrittsfläche parallel zur Y1-Koordinatenachse oder X1-Koordinatenachse ausgerichtet ist.

Der Strahlungsteiler teilt einen auf die ebene Eintrittsfläche auftreffenden Laserlichtstrahl bzw. einen zu dem ersten Messfeld hin gerichteten und auf die ebene Eintrittsfläche auftreffenden Laserlichtstrahl in einen ersten Teilstrahl, der den Strahlungsteiler durchsetzt, und einen durch Reflexion eines Teils des Laserlichtstrahls an der Eintrittsfläche erzeugten zweiten Teilstrahl auf.

Der sich von dem Strahlungsteiler erstreckende optische Weg des ersten Teilstrahls und der sich von dem Strahlungsteiler erstreckende optische Weg des zweiten Teilstrahls - bzw. der sich von dem Strahlungsteiler erstreckende vorgegebene optische Weg des ersten Teilstrahls und des zweiten Teilstrahls sind derart ausgebildet bzw. sind derart gewählt bzw. sind derart, dass der erste Teilstrahl auf das erste Messfeld und der zweite Teilstrahl auf das zweite Messfeld auftrifft und dass der optische Weg des ersten Teilstrahls bis zu dem ersten Messfeld kleiner ist als der optische Weg des zweiten Teilstrahls bis zu dem zweiten Messfeld. Diese Ausbildung der optischen Wege kann in bekannter Weise durch geeignete Wahl der Lagen des ersten und zweiten Messfelds relativ zu dem Strahlungsteiler und ggf. durch geeignete Wahl der Lage und Ausbildung wenigstens eines ggf. eingesetzten Umlenkmittels, wie z.B. eines Spiegels, relativ zu dem Strahlungsteiler realisiert werden.

Besonders bevorzugt sind das erste und zweite Messfeld bzw. das Koordinatensystem des ersten Messfelds und des zweiten Messfelds bei einer Ausführungsform derart in Bezug auf den Strahlungsteiler angeordnet, dass, wenn ein parallel zu einer Normalen auf dem ersten Messfeld ausgerichteter Laserlichtstrahl bzw. wenn ein mit dieser Normalen (also ein Vektor bzw. eine Gerade, die normal bzw. rechtwinkelig zu dem ersten Messfeld ausgerichtet ist) fluchtender Laserlichtstrahl auf die Eintrittsfläche des Strahlungsteilers auftrifft, der erste Teilstrahl auf dem ersten Messfeld einen Laserlicht-Fleck ausbildet dessen X1-Koordinate der X2-Koordinate des Laserlicht-Flecks des zweiten Teilstrahls auf dem zweiten Messfeld entspricht und dessen Y1-Koordinate der Y2-Koordinate des Laserlicht-Flecks des zweiten Teilstrahls auf dem zweiten Messfeld entspricht bzw. der Y2- Koordinate des LaserlichtFlecks des zweiten Teilstrahls entspricht, der sich auf dem zweiten Messfeld bei Bestrahlung mit dem zweiten Teilstrahl ausbildet. Um dies zu realisieren, kann - zusätzlich zu einer ggf. erforderlichen entsprechenden Anpassung der Lage der Koordinatenachsen der Koordinatensysteme der beiden Messfelder zueinander - z.B. ein als Ausrichtlaserstrahl dienender Laserlichtstrahl, der parallel zu der Normalen bzw. fluchtend mit dieser ausgerichtet ist, auf die Eintrittsfläche des Strahlungsteilers auftreffen bzw. gestrahlt werden und die Position bzw. Lage des sich auf dem ersten Messfeld ausbildenden Laserlicht-Flecks des ersten Teilstrahls und die Position bzw. Lage des sich auf dem zweiten Messfeld ausbildenden Laserlicht-Flecks des zweiten Teilstrahls jeweils als Zentrum des Koordinatensystems definiert werden bzw. dem Zentrum zugordnet werden bzw. die Lagen des Koordinatensystems des ersten Messfelds und des zweiten Messfelds können auf dem ersten Messfeld und zweiten Messfeld hierfür derart gewählt bzw. versetzt werden, dass sich der Laserlicht-Fleck des ersten Teilstrahls im Zentrum des Koordinatensystems des ersten Messfelds und der Laserlicht-Fleck des zweiten Teilstrahls im Zentrum des Koordinatensystems des zweiten Messfelds befindet.

Durch diese obige Anordnung des ersten und zweiten Messfeld bzw. des Koordinatensystems des ersten Messfelds und des zweiten Messfelds in Bezug auf den Strahlungsteiler kann in Schritt D der Aufwand zu Ermitteln der Ausrichtung des Laserlichtstrahls in Bezug auf die Drehachse auf der Grundlage der erfassten Koordinaten und Drehwinkel wirksam reduziert werden, da ein Versatz der Zentren nicht als Korrekturwert in die Ermittlung einbezogen werden muss.

Bei der um die Drehachse drehbaren Einrichtung kann es sich insbesondere z.B. um eine Welle oder eine Walze handeln, wobei auf der Grundlage von mittels des erfindungsgemäßen Verfahrens ermittelten Ausrichtungen der Drehachsen von Wellen bzw. Walzen in Bezug auf einen Laserlichtstrahl bzw. Laserstrahl insbesondere z.B. auch die Ausrichtung von Walzen bzw. Wellen zueinander in einer mehrere Walzen bzw. Wellen umfassenden Vorrichtung, wie z.B. einer Walzenanlage, ermittelt werden kann, um vorteilhaft eventuelle Fehlausrichtungen der Walzen bzw. Wellen zueinander zu ermitteln und ggf. korrigieren zu können.

Das Verfahren umfasst die folgenden Schritte:
(A) Drehfestes Verbinden der Laserlicht-Erfassungseinrichtung mit der Einrichtung, wobei die Laserlicht-Erfassungseinrichtung derart drehfest mit der Einrichtung verbunden wird, dass das erste Messfeld entlang der Drehachse oder entlang einer zu dieser parallelen Geraden von der Einrichtung entfernt bzw. beabstandet angeordnet ist, dass das zweite Messfeld entlang der Drehachse oder entlang einer zu dieser parallelen Geraden von der Einrichtung entfernt (beabstandet) angeordnet ist und dass die X1- Koordinatenachse und die Y1-Koordinatenachse des ersten Messfelds im wesentlichen rechtwinkelig zur Drehachse der Einrichtung ausgerichtet bzw. orientiert sind,
(B) Bestrahlen der Eintrittsfläche des Strahlungsteilers mit dem Laserlichtstrahl, wobei während des Bestrahlens der Eintrittsfläche die Einrichtung ausgehend von einer vorgegebenen Anfangs-Drehstellung in einem vorgegebenen Drehsinn um ein vorgegebenes Winkelmaß gedreht wird,
(C) Erfassen der X1-Koordinaten und Y1-Koordinaten des Laserlicht-Flecks des ersten Teilstrahls auf dem ersten Messfeld durch den ersten Laserlicht-Sensor und der X2-Koordinaten und Y2-Koordinaten des Laserlicht-Flecks des zweiten Teilstrahls auf dem zweiten Messfeld durch den zweiten Laserlicht-Sensors in wenigstens fünf verschiedenen Drehstellungen der Einrichtung, die beim Drehen gemäß Schritt (B) eingenommen werden, und Erfassen des Drehwinkels, um welchen die Einrichtung in jeder der verschiedenen Drehstellungen gegenüber der Anfangs-Drehstellung verdreht ist, und
(D) Ermitteln der Ausrichtung des Laserlichtstrahls in Bezug auf die Drehachse der Einrichtung auf der Grundlage der für jede Drehstellung erfassten Drehwinkel und der erfassten Y1-Koordinaten und Y2-Koordinaten oder auf der Grundlage der für jede Drehstellung erfassten Drehwinkel und der erfassten X1-Koordinaten und X2-Koordinaten.

Das erfindungsgemäße Verfahren zeichnet sich insbesondere dadurch aus, dass in Schritt A die Laserlicht-Erfassungseinrichtung insbesondere derart drehfest mit der Einrichtung verbunden wird, dass das erste Messfeld entlang der Drehachse oder einer entlang einer zu dieser parallelen Geraden von der Einrichtung entfernt angeordnet ist bzw. beabstandet angeordnet ist und dass auch das zweite Messfeld entlang der Drehachse oder entlang einer zu dieser parallelen Geraden von der Einrichtung entfernt angeordnet ist bzw. beabstandet angeordnet ist. Durch diese Beabstandung bzw. Entfernung der beiden Messfelder von der Einrichtung kann die Ausrichtung des Laserlichtstrahls in Bezug auf die Drehachse der Einrichtung auch dann zuverlässig ermittelt werden, wenn nur eine eingeschränkte Zugänglichkeit zu der Einrichtung vorliegt.

Dass die Ausrichtung des Laserlichtstrahls mittels der Laserlicht-Erfassungseinrichtung auch dann zuverlässig ermittelt werden kann, wenn die beiden Messfelder in der oben dargelegten Weise von der Einrichtung entfernt angeordnet bzw. beabstandet angeordnet sind, ist eine Folge des Umstands, dass durch Vorsehen des Strahlungsteilers und der mit diesem bereitgestellten ersten und zweiten Teilstrahl eine Laserlicht-Erfassungseinrichtung bereitgestellt wird, die eine ähnliche Ausrichtungsermittlung ermöglicht wie eine z.B. aus der DE 39 11 307 A1 bekannte Anordnung, in welcher die beiden Messfelder entlang einer zur Drehachse parallelen Geraden an der Einrichtung aufeinanderfolgend angeordnet sind. Durch die Laserlicht-Erfassungseinrichtung kann eine Mess-Anordnung realisiert werden, in welcher die beiden Messfelder entlang der Drehachse an der Einrichtung *virtuell* aufeinanderfolgend angeordnet sind, wobei mit dem Begriff *"virtuell"* also eine gedachte Gegebenheit zu verstehen ist, die zwar nicht physisch vorliegt aber doch in ihrer Funktionalität oder Wirkung vorhanden ist.

Insbesondere kann durch die von der rotierbaren Einrichtung vorgesehene Entfernung bzw. Beabstandung der beiden Messfelder vorteilhaft auf einfache und praktische Weise auch eine Überwachung der Ausrichtung der Drehachse einer Walze oder der Drehachsen mehrerer Walzen während des Betriebs derselben nach Art einer "Live"-Überwachung realisiert werden.

Messfehler infolge von Unregelmäßigkeiten an den Walzenoberflächen, die bei bekannten Lösungen auftreten können, spielen infolge der vorgesehenen Entfernung bzw. Beabstandung der beiden Messfelder keine Rolle.

Insbesondere auch durch Vorsehen eines oder mehrerer Umlenkmittel, wie z.B. eines Spiegels, kann bei der Laserlicht-Erfassungseinrichtung auf kleinem Raum ein für eine zuverlässige bzw. genaue Ermittlung der Ausrichtung erforderlicher großer Unterschied der sich von dem Strahlungsteiler erstreckenden optischen Wege der Teilstrahlen bereitgestellt werden. Bevorzugt kann die Laserlicht-Erfassungseinrichtung ein Gehäuse umfassen, in welchem die beiden Messfelder und der Strahlungsteiler angeordnet sind, wobei das Gehäuse z.B. mit einer maximalen Ausdehnung von ca. 100 mm ausgebildet werden kann, so dass das Verfahren auch vorteilhaft auf kleinem Raum problemlos durchführbar ist.

Unter der im wesentlichen rechtwinkeligen Ausrichtung der X1-Koordinatenachse und der Y1-Koordinatenachse des ersten Messfelds zur Drehachse der Einrichtung (vgl. Schritt A) ist hierbei eine Abweichung von der perfekten rechtwinkeligen Ausrichtung zu verstehen, die kleiner ist als 5 Grad, vorzugsweise kleiner ist als 1 Grad.

Dass zwei Achsen eine rechtwinkelige bzw. im Wesentlichen rechtwinkelige Orientierung bzw. Ausrichtung zueinander aufweisen setzt selbstverständlich nicht voraus, dass sich diese Achsen immer schneiden müssen. Wobei, wenn sich die beiden Achsen nicht schneiden, diese durch eine translatorische Verschiebung einen gemeinsamen Schnittpunkt ausbilden und dann einen rechten bzw. im wesentlichen rechten Winkel einschließen können.

In Schritt B erfolgt das Bestrahlen der Eintrittsfläche des Strahlungsteilers mit dem Laserlichtstrahl bzw. das Bestrahlen der Eintrittsfläche des Strahlungsteilers mit dem zu dem ersten Messfeld hin gerichteten Laserlichtstrahl und das Drehen der Einrichtung, wobei während des Bestrahlens der Eintrittsfläche die Einrichtung ausgehend von einer vorgegebenen Anfangs-Drehstellung in einem vorgegebenen Drehsinn um ein vorgegebenes Winkelmaß gedreht wird. Das vorgegebene Winkelmaß kann vorzugsweise wenigstens 90 Grad betragen, um die Ausrichtung durch Bereitstellen einer möglichst großen Anzahl von eingenommenen Drehstellungen, in welchen jeweils gemäß Schritt (C) die X1-Koordinaten und Y1-Koordinaten des Laserlicht-Flecks des ersten Teilstrahls auf dem ersten Messfeld und die X2-Koordinaten und Y2-Koordinaten des Laserlicht-Flecks des zweiten Teilstrahls auf dem zweiten Messfeld erfasst werden, sehr genau zu ermitteln, wobei die Anzahl der Drehstellungen besonders bevorzugt wesentlich größer als fünf sein kann, besonders bevorzugt größer als zehn oder zwanzig oder fünfzig sein kann.

Jedoch können vorteilhaft auch lediglich wenigstens fünf Drehstellungen (vgl. Schritt C) ausreichen, da die beim Drehen der Einrichtung um 360 Grad von den Laserlichtflecken der beiden Teilstrahlen auf dem ersten und zweiten Messfeld beschreibbaren geschlossenen Bahnkurven je nach Einstrahlrichtung des Laserlichtstrahls auf die Eintrittsfläche des Strahlungsteilers in Form von Ellipsen oder Kreisen ausgebildet sind und eine Ellipse durch wenigstens fünf Punkte und ein Kreis durch wenigstens drei Punkte festgelegt ist. Mithin kann insbesondere durch Kurvenanpassung an wenigstens fünf erfasste Positionen des Laserlichtflecks auf dem ersten Messfeld und durch Kurvenanpassung an wenigstens fünf erfasste Positionen des Laserlichtflecks auf dem zweiten Messfeld die jeweilige Ellipse bzw. der jeweilige Kreis als Spezialfall einer Ellipse durch Kurvenanpassung ermittelt werden. Auf der Grundlage der so ermittelten geschlossenen Bahnkurven auf dem ersten und dem zweiten Messfeld kann dann in Schritt D die Ausrichtung des Laserlichtstrahls in Bezug auf die Drehachse der Einrichtung in Verbindung mit den für jede Drehstellung erfassten Drehwinkeln ermittelt werden, wobei hierfür z.B. insbesondere die Zentren bzw. Mittelpunkte der beiden geschlossenen Bahnkurven durch eine Verbindungsgerade bzw. gedachte Verbindungsgerade miteinander verbunden werden können und die beiden Messfelder als entlang der Drehachse aufeinanderfolgend angeordnet vorzustellen sind(vgl. auch obige Ausführungen zum virtuellen aufeinanderfolgenden Anordnen), wobei der Abstand der Messfelder der Differenz bzw. dem Unterschied der sich von dem Strahlungsteiler erstreckenden optischen Wege des ersten und zweiten Teilstrahls entspricht, also dem optischen Weg des zweiten Teilstrahls bis zu dem zweiten Messfeld abzüglich des optischen Wegs des ersten Teilstrahls bis zu dem ersten Messfeld. Die Ausrichtung dieser Verbindungsgeraden in Bezug auf den Laserlichtstrahl - dessen Lage z.B. innerhalb eines vorgegebenen dreidimensionalen Koordinatensystems bzw. räumlichen dreidimensionalen Koordinatensystems bekannt sein kann - ist mit der Ausrichtung der Drehachse in Bezug auf diesen Laserstrahl identisch, da die Verbindungsgerade eine mit der Drehachse fluchtende Gerade ist bzw. weil die Verbindungsgerade eine die Drehachse verlängernde Gerade ist. Jeder Mittelpunkt der beiden geschlossenen Bahnkurven entspricht hierbei einem Durchstoßungspunkt bzw. gedachtem Durchstoßungspunkt einer die Drehachse verlängernden Geraden durch das jeweilige Messfeld bzw. jeder Mittelpunkt der beiden geschlossenen Bahnkurven ist hierbei mit einem Durchstoßungspunkt bzw. gedachtem Durchstoßungspunkt einer die Drehachse verlängernden Geraden durch das jeweilige Messfeld identisch bzw. im wesentlichen identisch. Zu Realisierung dieser Art der Ermittlung der Ausrichtung ist es erforderlich, dass das erste und zweite Messfeld bzw. das Koordinatensystem des ersten Messfelds und des zweiten Messfelds gemäß einer Ausführungsform (vgl. auch entsprechende obige Ausführungen) derart in Bezug auf den Strahlungsteiler angeordnet sind, dass, wenn ein parallel zu einer Normalen auf dem ersten Messfeld ausgerichteter Laserlichtstrahl bzw. wenn ein mit dieser Normalen fluchtender Laserlichtstrahl auf die Eintrittsfläche des Strahlungsteilers auftrifft, der erste Teilstrahl auf dem ersten Messfeld einen Laserlicht-Fleck ausbildet dessen X1-Koordinate der X2-Koordinate des Laserlicht-Flecks des zweiten Teilstrahls auf dem zweiten Messfeld entspricht und dessen Y1-Koordinate der Y2-Koordinate des Laserlicht-Flecks des zweiten Teilstrahls auf dem zweiten Messfeld entspricht bzw. der Y2- Koordinate des Laserlicht-Flecks des zweiten Teilstrahls entspricht, der sich auf dem zweiten Messfeld bei Bestrahlung mit dem zweiten Teilstrahl ausbildet.

Ist die Lage des Laserlichtstrahls jedoch derart, dass dieser mit der Drehachse der Einrichtung fluchtet bzw. vollständig fluchtet bildet sich auf beiden Messfeldern nur ein einziger Laserlicht-Fleck aus, dessen Koordinaten nicht von der Drehstellung bzw. dem Drehwinkel abhängen bzw. dessen Koordinaten bzw. dessen Position sich auf den beiden Messfeldern beim Drehen in Schritt B nicht ändern/ändert. Ferner kann die Lage des Laserlichtstrahls auch derart sein, dass dieser auf einen Durchstoßungspunkt bzw. gedachten Durchstoßungspunkt einer die Drehachse verlängernden Geraden durch das erste Messfeld trifft, so dass sich nur auf dem ersten Messfeld ein derartiger einziger Laserlicht-Fleck ausbildet, dessen Koordinaten auf dem ersten Messfeld nicht von der Drehstellung bzw. dem Drehwinkel abhängen während der Laserlicht-Fleck des zweiten Teilstrahls auf dem zweiten Messfeld bei Rotation bzw. Drehung um 360 Grad eine Ellipse oder einen Kreis beschreiben kann.

In Schritt D erfolgt das Ermitteln der Ausrichtung des Laserlichtstrahls in Bezug auf die Drehachse der Einrichtung auf der Grundlage der für jede Drehstellung erfassten Drehwinkel und der erfassten Y1-Koordinaten und Y2-Koordinaten oder auf der Grundlage der für jede Drehstellung erfassten Drehwinkel und der erfassten X1-Koordinaten und X2-Koordinaten. Hierfür werden besonders bevorzugt die Y1 Koordinaten (oder X1-Koordinaten) in Abhängigkeit von dem gemessenen Drehwinkel über der aus den Y1-Koordinaten und Y2-Koordinaten gebildeten Differenz Y1-Y2 (oder über der aus den X1-Koordinaten und X2-Koordinaten gebildeten Differenz X1-X2) - die ebenfalls in Abhängigkeit vom dem gemessenen Drehwinkel dargestellt wird- aufgetragen und es wird eine geschlossene Bahnkurve in Form eines Kreises oder einer Ellipse durch Kurvenanpassung an die aufgetragenen Koordinaten ermittelt. Mittels dieser ermittelten Bahnkurve kann dann die Ausrichtung des Laserlichtstrahls in Bezug auf die Drehachse einfach ermittelt bzw. abgelesen werden. Auch diese weitere Art bzw. Form der Ermittlung setzt voraus, dass das erste und zweite Messfeld bzw. dass das Koordinatensystem des ersten Messfelds und des zweiten Messfelds bei einer Ausführungsform (vgl. auch oben) derart in Bezug auf den Strahlungsteiler angeordnet, dass wenn ein parallel zu einer Normalen auf dem ersten Messfeld ausgerichteter Laserlichtstrahl bzw. wenn ein mit dieser Normalen fluchtender Laserlichtstrahl auf die Eintrittsfläche des Strahlungsteilers auftrifft, der erste Teilstrahl auf dem ersten Messfeld einen Laserlicht-Fleck ausbildet dessen X1-Koordinate der X2-Koordinate des Laserlicht-Flecks des zweiten Teilstrahls auf dem zweiten Messfeld entspricht und dessen Y1-Koordinate der Y2-Koordinate des Laserlicht-Flecks des zweiten Teilstrahls auf dem zweiten Messfeld entspricht bzw. der Y2- Koordinate des Laserlicht-Flecks des zweiten Teilstrahls entspricht, der sich auf dem zweiten Messfeld bei Bestrahlung mit dem zweiten Teilstrahl ausbildet. Vorzugsweise ist bei dieser Ausführungsform die Eintrittsfläche des Strahlungsteilers gegenüber dem ersten Messfeld unter einem Winkel von 45 geneigt ausgerichtet.

Die Ermittlung der Ausrichtung auf der Grundlage der obigen Arten bzw. Formen der Ermittlung ist jedoch nicht auf diese beschränkt. Grundsätzlich kann die Ausrichtung auf der Grundlage der für jede Drehstellung erfassten Drehwinkel und der erfassten Y1-Koordinaten und Y2-Koordinaten oder auf der Grundlage der für jede Drehstellung erfassten Drehwinkel und der erfassten X1-Koordinaten und X2-Koordinaten in anderer für den Fachmann bekannter Weise ermittelt werden, da die für jede Drehstellung erfassten Drehwinkel zusammen mit den erfassten Y1-Koordinaten und Y2-Koordinaten oder zusammen mit den erfassten X1- Koordinaten und X2-Koordinaten Informationen darstellen, die für die Ermittlung der Ausrichtung des Laserlichtstrahls in Bezug auf die Drehachse der Einrichtung geeignet sind. Die durch das Verfahren ermittelbare Ausrichtung ist insbesondere nicht abhängig von dem Parallelversatz des ersten Teilstrahls gegenüber dem auf die Eintrittsfläche des Strahlungsteilers eingestrahlten Laserlichtstrahl, also dem Parallelversatz, welcher beim Durchgang durch den Strahlungsteiler in bekannter Weise durch Brechung bzw. Lichtbrechung verursacht wird.

Unter dem Begriff der Ausrichtung ist vorstehend und auch nachstehend allgemein nicht die Lage von Objekten (ein Objekt kann z.B. eine Achse oder ein Laserlichtstrahl sein) zueinander zu verstehen, da der Begriff der "Lage" auch eine Information über den Abstand der der Objekte umfasst. Unter dem Begriff der Ausrichtung ist in Abgrenzung zu dem Begriff der Lage lediglich die Ausrichtung bzw. Neigung der Objekte zueinander zu verstehen (also ohne Information über den Abstand), wobei hierunter insbesondere auch die parallele Neigung bzw. parallele Ausrichtung mit umfasst wird.

Insbesondere ist unter dem Begriff der Ausrichtung vorstehend und auch nachstehend nicht die Lage der Drehachse zu dem Laserlichtstrahl bzw. die Lage der Laserlichtstrahlen oder Drehachsen zueinander zu verstehen, da der Begriff der "Lage" auch eine Information über den Abstand der Drehachse zu dem Laserlichtstrahl bzw. über den Abstand der Laserlichtstrahlen oder Drehachsen zueinander umfasst. Unter dem Begriff der Ausrichtung ist in Abgrenzung zu dem Begriff der Lage lediglich die Ausrichtung bzw. Neigung des Laserlichtstrahls relativ zu der Drehachse bzw. die Ausrichtung bzw. Neigung der Laserlichtstrahlen zueinander bzw. die Ausrichtung bzw. Neigung der Drehachsen zueinander zu verstehen (also ohne Information über den Abstand), wobei hierunter insbesondere auch die parallele Neigung bzw. parallele Ausrichtung mit umfasst wird. Zur Quantifizierung der Ausrichtung bzw. Neigung kann der Laserlichtstrahl mit der Drehachse durch eine Translation bzw. gedachte oder konstruierte Translation der Drehachse und/oder des Laserlichtstrahls zu Schnitt gebracht werden - sofern der Laserlichtstrahl mit der Drehachse nicht schon einen gemeinsamen Schnittpunkt bildet - und die Größe des Schnittwinkels bzw. Neigungswinkels als Maß zur Quantifizierung der Ausrichtung verwendet bzw. herangezogen werden. Entsprechendes gilt auch für die Quantifizierung der Laserlichtstrahlen oder Drehachsen zueinander.

Das in Schritt C vorgesehene Erfassen des Drehwinkels kann in für den Fachmann bekannter Weise mittels einer an der Laserlicht-Erfassungseinrichtung bzw. an der drehbaren Einrichtung vorgesehenen Messeinrichtung zum Messen eines Drehwinkels, die insbesondere ein Inklinometer umfassen kann, durch Messen vorgenommen werden, welche den Drehwinkel während des Drehens misst bzw. erfasst, so dass jeder durch die X1-Koordinaten, Y1-Koordinaten, X2- Koordinaten und Y2-Koordinaten definierten Position des Laserlichtflecks des ersten Teilstrahls und des zweiten Teilstrahls ein Drehwinkel, um welchen die Einrichtung gegenüber der Anfangs-Drehstellung bzw. Ausgangs-Drehstellung verdreht ist, zugeordnet werden kann.

Wenn die Einrichtung eine Walze oder eine Welle ist und die Walze oder die Welle an einer Stirnseite eine Gewindebohrung aufweist kann vorzugsweise zum drehfesten Verbinden gemäß Schritt A über die Gewindebohrung eine Schraubverbindung zwischen der Laserlicht-Erfassungseinrichtung und der Walze oder der Welle hergestellt werden. Über eine Schraubverbindung kann seine sehr stabile drehfeste Verbindung zwischen der Laserlicht-Erfassungseinrichtung und der um die Drehachse drehbaren Einrichtung geschaffen werden. Eine derartige Verbindung bietet sich insbesondere dann vorteilhaft an, wenn an der Stirnseite der Walze bzw. Welle bereits eine Gewindebohrung vorliegt, die z.B. für eine andere Anwendung vorgesehen ist und mithin dann auch zum Ermitteln der Ausrichtung mittels des erfindungsgemäßen Verfahrens verwendet werden kann.

Wenn die Einrichtung eine Walze oder eine Welle ist und wenn die Walze oder die Welle wenigstens an der Mantelfläche wenigstens bereichsweise magnetisch ausgebildet ist, kann die Laserlicht-Erfassungseinrichtung zum drehfesten Verbinden gemäß Schritt A vorzugsweise eine Halteeinrichtung mit wenigstens einem magnetisch ausgebildeten Haltemittel aufweisen und die Halteeinrichtung kann dann durch in Kontakt bringen des Haltemittels mit der Mantelfläche der Walze oder Welle durch Magnetkraft drehfest verbunden werden. Durch Vorsehen der Halteeinrichtung kann die Ausrichtung insbesondere auch dann zuverlässig ermittelt werden, wenn die Stirnseite der Walze oder der Welle z.B. infolge einer Einhausung nicht zugänglich ist.

Bei den Laserlicht-Sensoren kann es sich jeweils um einen beliebigen mit einem ebenen Messfeld versehenen Laserlicht-Sensor handeln. Besonders bevorzugt handelt es sich jeweils um einen Laserlicht-Sensor, der eine Mehrzahl von Zeilensensoren zur Ausbildung des Messfelds aufweist. Die von dem Laserlicht-Sensor erfassten X1-Koordinaten und Y1-Koordinaten und X2-Koordinaten und Y2-Koordinaten können in Form analoger oder digitaler Signale über einen Signalübertragungsweg - auch kabellos- z.B. einer Auswerteeinrichtung, wie z.B. einem Computer z.B. in Form eines Laptops oder eines Tablets zur weiteren Auswertung zugeführt werden. Insbesondere kann es sich bei dem Laserlicht-Sensor um einen PSD-Sensor (PSD ist eine Abkürzung für "Position Sensitive Device") handeln.

Bei der vorstehend und nachstehend erwähnten X1-Koordinate und Y1-Koordinate bzw. X2-Koordinate und Y2-Koordinate des Laserlicht-Flecks handelt es sich selbstverständlich jeweils um die Koordinaten eines Punktes, obwohl der Laserlicht-Fleck immer eine flächige Ausdehnung auf dem jeweiligen Messfeld hat. Unter den X1-Koordinaten und Y1-Koordinaten bzw. X2-Koordinaten und Y2-Koordinaten des Laserlicht-Flecks sind vorstehend und nachstehend also immer die Koordinaten eines Punktes zu verstehen, der aus Ausbildung der Fläche und/oder Helligkeitsverteilung des Laserlicht-Flecks auf der Fläche bzw. dem Messfeld ermittelt werden kann. Insbesondere kann es sich bei dem Punkt z.B. um den Flächenschwerpunkt des Laserlicht-Flecks handeln. Die Ermittlung bzw. Berechnung des Punktes wird vorzugsweise mittels einer Berechnungsvorrichtung der Laserlicht-Erfassungseinrichtung, wie z.B. einem Computer, auf der Grundlage von dem jeweiligen Laserlicht-Fleck zugeordneten bzw. von diesem erzeugten oder bewirkten digitalen und/oder analogen Signalen vorgenommen, die von dem Laserlicht-Sensor ausgegeben werden. Sofern es sich beim Laserlicht-Sensor um einen PSD-Sensor handelt, kann die Berechnung des Flächenschwerpunkts z.B. in bekannter Weise auf der Grundlage geeigneter Widerstandsmessungen an den Sensorecken bzw. Felderecken erfolgen. Bei der Schwerpunktberechnung wird dann eine Fläche auf dem jeweiligen Messfeld ausgewertet. Diese Berechnung an einem PSD-Sensor kann es ermöglichen, Bewegungen eines Laserlicht-Flecks auf dem Messfeld im µm-Bereich zu ermitteln, so dass die Größe des Laserlicht-Flecks bei einem PSD-Sensor eine untergeordnete Rolle spielt.

Schritt B wird nach Schritt A vorgenommen und Schritt C wird während des Schritts B vorgenommen. Schritt D erfolgt nach Schritt C.

Die Erfindung betrifft ferner ein Verfahren zum Ermitteln der Ausrichtung von mehreren Einrichtungen zueinander, die voneinander beabstandet und jeweils um eine Drehachse rotierbar sind, wobei das Verfahren die folgenden Schritte umfasst:
(I) Ermitteln der Ausrichtung der Drehachse einer ersten Einrichtung in Bezug auf einen ersten Laserlichtstrahl mittels eines obigen erfindungsgemäßen Verfahrens,
(II) Bereitstellen wenigstens eines zweiten Laserlichtstrahls, wobei sich die Lage des zweiten Laserlichtstrahls von der des ersten Laserlichtstrahls unterscheidet,
(III) Ermitteln der Ausrichtung der Drehachse wenigstens einer zweiten Einrichtung in Bezug auf den zweiten Laserlichtstrahl mittels eines obigen erfindungsgemäßen Verfahrens,
(IV) Ermitteln der Ausrichtung des zweiten Laserlichtstrahls relativ zu dem ersten Laserlichtstrahl, und
(V) Ermitteln der Ausrichtung der Drehachse der zweiten Einrichtung in Bezug auf den ersten Laserlichtstrahl auf der Grundlage der in Schritt (IV) ermittelten Ausrichtung und der in Schritt (III) ermittelten Ausrichtung und Ermitteln der Ausrichtung der Drehachse der ersten Einrichtung in Bezug auf die Drehachse der zweiten Einrichtung auf der Grundlage der ermittelten Ausrichtung der Drehachse der zweiten Einrichtung in Bezug auf den ersten Laserlichtstrahl und der Schritt (I) ermittelten Ausrichtung.

Mit diesem Verfahren kann vorteilhaft auf der Grundlage des obigen Verfahrens zum Ermitteln der Ausrichtung eines Laserlichtstrahls in Bezug auf eine Drehachse einer Einrichtung die Ausrichtung von mehreren bzw. wenigstens zwei Einrichtungen zueinander, die voneinander beabstandet und jeweils um eine Drehachse rotierbar sind, ermittelt werden. Insbesondere kann mit diesem Verfahren vorteilhaft z.B. die Ausrichtung von Walzen eines Walzwerks zueinander ermittelt und auf Parallelität überprüft werden, um Abweichungen von einer erwünschten parallelen Ausrichtung der Drehachsen der Walzen zueinander zu ermitteln und geeignete Korrekturmaßnahmen durchzuführen.

Das Ermitteln der Ausrichtung des zweiten Laserlichtstrahls relativ zu dem ersten Laserlichtstrahl kann auf bekannte Weise ermittelt werden, also z.B. dadurch, dass die Ausrichtung mittels geeigneter Laserlichtsensoren und/oder auf der Grundlage von dem jeweils verwendeten Laser bzw. den jeweils verwendeten Lasern gewählten Abstrahlrichtungen der Laserlichtstrahlen ermittelt wird.

Durch die Benennung der Schritte mit den Symbolen I, II, III, IV und V ist keine bzw. keine ausschließliche Bindung an eine zeitliche Reihenfolge zu verstehen. So kann Schritt III nach Schritt I oder es kann Schritt I auch nach Schritt III vorgenommen werden. Schritt II wird vor Schritt III vorgenommen. Schritt IV kann bereits nach Schritt II und vor Schritt III vorgenommen werden, Schritt V wird als letzter Schritt zuletzt durchgeführt. Bevorzugt wird Schritt V nach Schritt IV, Schritt IV nach Schritt III, Schritt III nach Schritt II und Schritt II nach Schritt I vorgenommen bzw. durchgeführt.

Vorzugsweise werden der erste und der wenigstens zweite Laserlichtstrahl von ein und derselben Laserlichtquelle erzeugt, wobei zum Bereitstellen der sich in ihrer Lage voneinander unterscheidenden Laserlichtstrahlen die Lage der Laserlichtquelle und/oder die Abstrahlrichtung der Laserlichtquelle verändert wird. Durch Verwenden einer einzigen Laserlichtquelle können die Laserlichtstrahlen auf einfache und praktische Weise bereitgestellt werden.

Bei einer bevorzugten Ausführungsform des Verfahrens zum Ermitteln der Ausrichtung von mehreren Einrichtungen zueinander teilt die Laserlichtquelle einen horizontal ausgerichteten Laserlicht-Grundstrahl (als einen parallel zum Boden bzw. der Erdoberfläche ausgerichteten Laserlicht-Grundstrahl) in einen horizontal ausgerichteten Teilstrahl (als einen parallel zum Boden bzw. der Erdoberfläche ausgerichteten Teilstrahl) und einen weiteren Teilstrahl auf, der zu dem horizontal ausgerichteten Teilstrahl rechtwinkelig ausgerichtet ist, wobei die Laserlichtquelle ferner dazu eingerichtet ist, den weiteren Teilstrahl in einer sich vertikal erstreckenden Ebene zu rotieren, und wobei der erste Laserlichtstahl ein erster horizontal ausgerichteter Teilstrahl der Laserlichtquelle ist, und wobei der der zweite Laserlichtstrahl ein zweiter horizontal ausgerichteter Teilstrahl der Laserlichtquelle ist bzw. wobei der erste Laserlichtstahl und der zweite Laserlichtstrahl horizontal ausgerichtete Teilstrahlen der Laserlichtquelle sind, und
wobei vor Schritt (I) ein dritter Laserlicht-Sensor mit einem dritten ebenen Messfeld und ein vierter Laserlicht-Sensor mit einem vierten ebenen Messfeld mit einem vorgegebenen Abstand der Messfelder zueinander in vorgegebenen Positionen angeordnet werden, wobei das dritte Messfeld eine Y3-Koordinatenachse und das vierte Messfeld eine Y4-Koordinatenachse aufweist bzw. wobei sich die Ebene des dritten Messfelds entlang einer in der Ebene liegenden Y3-Koordinatenachse erstreckt und wobei sich die Ebene des vierten Messfelds entlang einer in der Ebene liegenden Y4-Koordinatenachse erstreckt,
wobei das dritte und das vierte Messfeld in den vorgegebenen Positionen derart angeordnet werden, dass die Y3-Koordinatenachse und Y4-Koordinatenachse parallel zueinander sind und sich horizontal erstrecken, wobei die Positionen des dritten und vierten Messfelds ferner derart gewählt werden, dass in den Schritten (I) und (III) der in der vertikalen Ebene rotierbare weitere Teilstrahl auf das dritte und das vierte Messfeld auftreffen kann, und
wobei in Schritt (IV) zum Ermitteln der Ausrichtung des zweiten Laserlichtstrahls relativ zu dem ersten Laserlichtstrahl in den Schritten (I) und (III) zusätzlich die Y3-Koordinaten und Y4-Koordinaten wenigstens eines Laserlicht-Flecks des auf das dritte und vierte Messfeld auftreffenden weiteren Teilstrahls erfasst werden- bzw. zusätzlich die Y3-Koordinaten und Y4-Koordinaten wenigstens eines sich auf dem dritten und vierten Messfeld ausbildenden Laserlicht-Flecks des auf das dritte und vierte Messfeld auftreffenden weiteren Teilstrahls erfasst werden - und auf deren Grundlage die Ausrichtung des zweiten Laserlichtstrahls relativ zu dem ersten Laserlichtstrahl ermittelt wird
bzw. wobei in Schritt (IV) wird zum Ermitteln der Ausrichtung des zweiten Laserlichtstrahls relativ zu dem ersten Laserlichtstrahl in den Schritten (I) und (III) zusätzlich die Y3-Koordinate wenigstens eines Laserlicht-Flecks des auf das dritte Messfeld auftreffenden weiteren Teilstrahls durch den dritten Laserlicht-Sensor erfasst wird und zusätzlich die Y4-Koordinate wenigstens eines Laserlicht-Flecks des auf das vierte Messfeld auftreffenden weiteren Teilstrahls durch den vierten Laserlicht-Sensor erfasst wird und auf der Grundlage der Y3-Koordinate und der Y4-Koordinate die Ausrichtung des zweiten Laserlichtstrahls relativ zu dem ersten Laserlichtstrahl ermittelt wird.

Zum Erzeugen bzw. Bereitstellen des in einer sich vertikal erstreckenden Ebene rotierbaren weiteren Teilstrahls kann die Laserlichtquelle in Form eines Rotationslasers aufgebaut sein und ein rotierbares Umlenkprisma aufweisen. Zum Bereitstellen des horizontal ausgerichteten Teilstrahls können z.B. Neigungskompensatoren vorgesehen sein.

Mittels dieser bevorzugten Ausführungsform kann z.B. die Ausrichtung der Drehachsen der Walzen einer horizontal bzw. im wesentlichen horizontal ausgerichteten Walzanlage zueinander genau ermittelt werden, da hierfür ein erster Laserlichtstrahl in Form eines ersten horizontal ausgerichteten Teilstrahls und wenigstens ein zweiter Laserlichtstrahl in Form wenigstens eines zweiten horizontal ausgerichteten Teilstrahls verwendet werden, wobei deren Ausrichtung zueinander auf einfache und präzise Weise in der oben beschriebenen Weise mittels des in der vertikalen Eben rotierbaren weiteren Teilstrahls und dem dritten und vierten Laserlichtsensor ermittelt werden kann.

Der dritte Laserlichtsensor ist dazu eingerichtet, die Y3-Koordinate eines Laserlicht-Flecks eines auf das Messfeld auftreffenden Laserlichtstrahls auf dem Messfeld zu erfassen. Entsprechendes trifft auch für den vierten Laserlichtsensor zu, der also auch dazu eingerichtet ist, die Y4-Koordinate eines Laserlicht-Flecks eines auf das Messfeld auftreffenden Laserlichtstrahls auf dem Messfeld zu erfassen. Bei dem dritten und vierten Laserlicht-Sensor kann es sich jeweils um einen beliebigen mit einem ebenen Messfeld versehenen Laserlicht-Sensor in der z.B. bereits oben beschriebenen Art handeln. Besonders bevorzugt handelt es sich jeweils um einen Laserlicht-Sensor, der eine Mehrzahl von Zeilensensoren oder auch nur einen Zeilensensor zur Ausbildung des Messfelds aufweist, da ja hier jeweils nur die Erfassung in einer Y3- Richtung bzw. Y4-Richtung vorgesehen ist, also nur in jeweils einer Raumrichtung.

In Schritt (IV) wird auf der Grundlage der erfassten Y3-Koordinaten und Y4-Koordinaten wenigstens eines Laserlicht-Flecks des auf das dritte und vierte Messfeld auftreffenden weiteren Teilstrahls die Ausrichtung des zweiten Laserlichtstrahls relativ zu dem ersten Laserlichtstrahl ermittelt. Da der Abstand des dritten Messfelds zu dem vierten Messfeld als vorgegebener Abstand bekannt ist und der weitere Teilstahl rechtwinkelig zu dem jeweils in Form des horizontal ausgerichteten Teilstrahls ausgebildeten ersten bzw. zweiten Laserlichtstrahl ist, kann auf der Grundlage einfacher geometrischer Zusammenhänge, z.B. auch über die Tangens-Funktion die Ausrichtung des zweiten Laserlichtstrahls relativ zu dem ersten Laserlichtstrahl ermittelt werden.

Die Laserlicht-Erfassungseinrichtung zum Ermitteln der Ausrichtung eines Laserlichtstrahls in Bezug auf eine Drehachse einer Einrichtung, die um die Drehachse rotierbar ist, umfasst einen ersten Laserlicht-Sensor mit einem ersten ebenen Messfeld, einen zweiten Laserlicht-Sensor mit einem zweiten ebenen Messfeld und einen Strahlungsteiler.

Das erste Messfeld der Laserlicht-Erfassungseinrichtung weist ein Koordinatensystem mit einer X1-Koordinatenachse und einer zu der X1-Koordinatenachse rechtwinkeligen Y1-Koordinatenachse auf, wobei der erste Laserlicht-Sensor dazu eingerichtet ist, die X1-Koordinate und Y1-Koordinate eines Laserlicht-Flecks eines auf das erste Messfeld auftreffenden Laserlichtstrahls auf dem ersten Messfeld zu erfassen.

Das zweite Messfeld der Laserlicht-Erfassungseinrichtung weist ein Koordinatensystem mit einer X2-Koordinatenachse und einer zu der X2-Koordinatenachse rechtwinkeligen Y2-Koordinatenachse auf, wobei der zweite Laserlicht-Sensor dazu eingerichtet ist, die X2-Koordinate und Y2-Koordinate eines Laserlicht-Flecks eines auf das zweite Messfeld auftreffenden Laserlichtstrahls auf dem zweiten Messfeld zu erfassen.

Die Y2-Koordinatenachse des zweiten Messfelds ist parallel zur Y1-Koordinatenachse des ersten Messfelds orientiert ist und/oder die X2-Koordinatenachse des zweiten Messfelds ist parallel zur X1-Koordinatenachse des ersten Messfelds orientiert, wobei der Strahlungsteiler eine ebene Eintrittsfläche und eine zu dieser parallele Austrittsfläche aufweist, wobei die Eintrittsfläche parallel zur Y1-Koordinatenachse oder X1-Koordinatenachse ausgerichtet ist, wobei der Strahlungsteiler einen auf die ebene Eintrittsfläche auftreffenden Laserlichtstrahl bzw. einen zu dem ersten Messfeld hin gerichteten und auf die ebene Eintrittsfläche auftreffenden Laserlichtstrahl in einen ersten Teilstrahl, der den Strahlungsteiler durchsetzt, und einen durch Reflexion eines Teils des Laserlichtstrahls an der Eintrittsfläche erzeugten zweiten Teilstrahl aufteilt.

Der sich von dem Strahlungsteiler erstreckende optische Weg des ersten Teilstrahls und des zweiten Teilstrahls sind derart ausgebildet, dass der erste Teilstrahl auf das erste Messfeld und der zweite Teilstrahl auf das zweite Messfeld auftrifft und dass der optische Weg des ersten Teilstrahls bis zu dem ersten Messfeld kleiner ist als der optische Weg des zweiten Teilstrahls bis zu dem zweiten Messfeld bzw. dass die Laufzeit des ersten Teilstrahls bis zu dem ersten Messfeld kleiner ist als die Laufzeit des zweiten Teilstrahls bis zu dem zweiten Messfeld.

Die Laserlicht-Erfassungseinrichtung ist derart drehfest mit der Einrichtung verbindbar, dass das erste Messfeld entlang der Drehachse oder entlang einer zu dieser parallelen Geraden von der Einrichtung entfernt angeordnet ist, dass das zweite Messfeld entlang der Drehachse oder entlang einer zu dieser parallelen Geraden von der Einrichtung entfernt angeordnet ist und dass die X1- Koordinatenachse und die Y1-Koordinatenachse des ersten Messfelds im wesentlichen rechtwinkelig zur Drehachse der Einrichtung ausgerichtet bzw. orientiert sind.

Die von Einrichtung entfernte Anordnung des ersten und zweiten Messfelds kann z.B. mit geeigneten Beabstandungsmitteln erfolgen, die unter Beibehaltung der drehfesten Verbindung der Einrichtung mit der Laserlicht-Erfassungseinrichtung die Entfernung bzw. Beabstandung realisieren können.

Die Laserlicht-Erfassungseinrichtung weist ferner eine Auswerteeinheit und eine Messeinrichtung zum Messen eines Drehwinkels auf.

Die Auswerteeinheit ist dazu eingerichtet, die Ausrichtung des Laserlichtstrahls in Bezug auf die Drehachse der Einrichtung auf der Grundlage von Y1-Koordinaten und Y2-Koordinaten oder X1-Koordinaten und X2-Koordinaten des Laserlicht-Flecks des ersten und zweiten Teilstrahls, die durch den ersten Laserlicht-Sensor und den zweiten Laserlicht-Sensor beim Drehen der Einrichtung in einem vorgegebenen Drehsinn um ein vorgegebenes Winkelmaß in wenigstens fünf verschiedenen Drehstellungen der Einrichtung erfasst werden, und auf der Grundlage der durch die Messeinrichtung messbaren bzw. gemessenen Drehwinkel, um welchen die Einrichtung in jeder der verschiedenen Drehstellungen gegenüber einer Anfangs-Drehstellung verdreht ist, zu ermitteln.

Die Messeinrichtung zum Messen eines Drehwinkels kann insbesondere ein Inklinometer umfassen, mit welchem der Drehwinkel vorteilhaft sehr präzise gemessen werden kann. Aufgrund der bereits oben im Zusammenhang mit dem erfindungsgemäßen Verfahren zum Ermitteln der Ausrichtung eines Laserlichtstrahls in Bezug auf eine Drehachse einer Einrichtung dargelegten Gründen kann mittels der obigen Laserlicht-Erfassungseinrichtung die Ausrichtung des Laserlichtstrahls in Bezug auf die Drehachse der Einrichtung auch dann zuverlässig ermittelt werden wenn nur eine eingeschränkte Zugänglichkeit zu der Einrichtung vorliegt.

Vorzugsweise ist die Laserlicht-Erfassungseinrichtung zum Herstellen einer drehfesten Verbindung mit einer in Form einer Welle oder einer Walze ausgebildeten Einrichtung dazu eingerichtet, eine Schraubverbindung zwischen der Laserlicht-Erfassungseinrichtung und der Einrichtung über eine Gewindebohrung, die an einer Stirnseite der Einrichtung vorgesehen ist, herzustellen, einhergehend mit den bereits oben im Zusammenhang mit dem erfindungsgemäßen Verfahren zum Ermitteln der Ausrichtung eines Laserlichtstrahls in Bezug auf eine Drehachse einer Einrichtung dargelegten Gründen.

Besonders bevorzugt weist die Laserlicht-Erfassungseinrichtung zum Herstellen einer drehfesten Verbindung mit der Einrichtung eine Halteeinrichtung mit wenigstens einem magnetisch ausgebildeten Haltemittel aufweist, so dass die Laserlicht-Erfassungseinrichtung durch in Kontakt bringen des Haltemittels mit der Mantelfläche einer in Form einer Walze oder einer Welle ausgebildeten Einrichtung durch Magnetkraft drehfest verbindbar ist, wenn die um die Drehachse rotierbare Einrichtung an der Mantelfläche wenigstens bereichsweise magnetisch ausgebildet ist, einhergehend mit den bereits oben im Zusammenhang mit dem erfindungsgemäßen Verfahren zum Ermitteln der Ausrichtung eines Laserlichtstrahls in Bezug auf eine Drehachse einer Einrichtung dargelegten Gründen.

### Kurzbeschreibung der Zeichnung

Nachfolgend werden Ausführungsbeispiele der Erfindung anhand der beigefügten Zeichnung näher erläutert. In der Zeichnung zeigen:
- Fig. 1A: eine schematische Darstellung eines Ausführungsbeispiels einer erfindungsgemäßen Laserlicht-Erfassungseinrichtung zusammen mit einer Walze
- Fig. 1B: eine schematische vergrößerte Darstellung der Messfelder der Einrichtung nach Fig. 1A
- Fig. 1C: eine schematische Darstellung einer Stirnseite der Walze nach' Fig. 1A
- Fig. 2: die Laserlicht-Erfassungseinrichtung nach Fig. 1A, ergänzt um eine schematische Skizze zur Veranschaulichung der Arbeitsweise der Laserlicht-Erfassungseinrichtung,
- Fig. 3: eine dreidimensionale Darstellung eines weiteren Ausführungsbeispiels einer Laserlicht-Erfassungseinrichtung zusammen mit zwei Walzen
- Fig. 4: eine Darstellung eines ersten und zweiten Messfelds,
- Fig. 5: eine Darstellung einer geschlossenen Bahnkurve in Form einer Ellipse innerhalb eines Koordinatensystems
- Fig. 6A: eine schematische Vorderansicht auf mehrere Walzanalgen,
- Fig. 6B: eine schematische Darstellung zur Veranschaulichung eines Ausführungsbeispiels des erfindungsgemäßen Verfahrens zum Ermitteln der Ausrichtung der Drehachsen von zwei Einrichtungen zueinander, und
- Fig. 7A bis C: jeweils schematische Darstellung zur Veranschaulichung eines weiteren Ausführungsbeispiels des erfindungsgemäßen Verfahrens zum Ermitteln der Ausrichtung der Drehachsen von mehreren Einrichtungen zueinander.

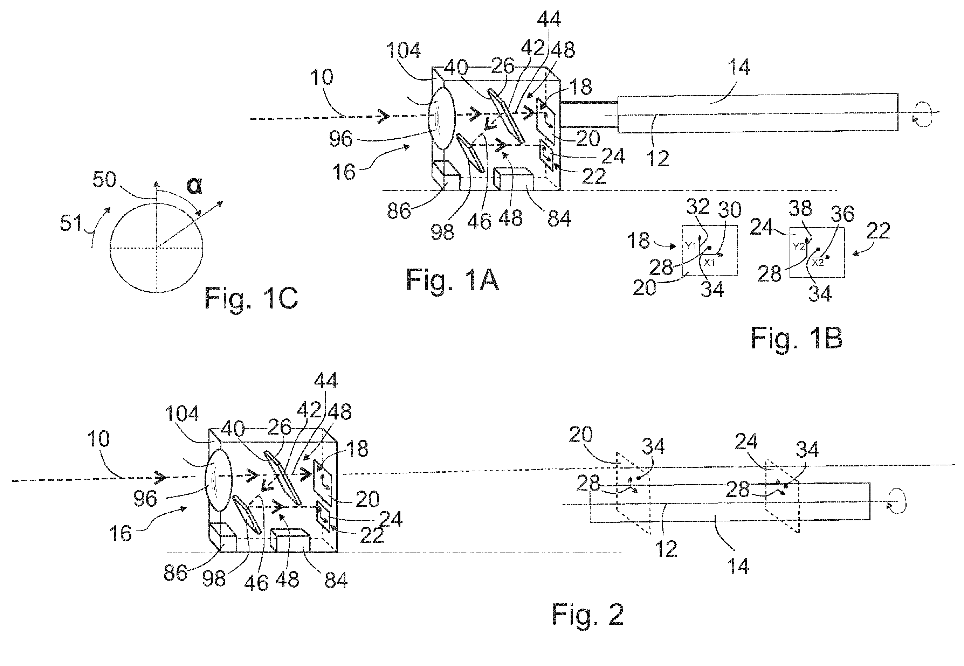

Bei der Laserlicht-Erfassungseinrichtung 16 nach Fig. 1A handelt es sich um eine Laserlicht-Erfassungseinrichtung 16 zum Ermitteln der Ausrichtung eines Laserlichtstrahls 10 in Bezug auf eine Drehachse 12 einer in Form einer Walze ausgebildeten Einrichtung 14, die um die Drehachse 12 rotierbar ist.

Die Laserlicht-Erfassungseinrichtung 16 weist einen ersten Laserlicht-Sensor 18 mit einem ersten ebenen Messfeld 20, einen zweiten Laserlicht-Sensor 22 mit einem zweiten ebenen Messfeld 24 und einen Strahlungsteiler 26 auf, wobei die beiden Messfelder 20, 24 und der Strahlungsteiler 26 in einem Gehäuse 104 angeordnet sind.

Das erste Messfeld 20 (vgl. auch Fig. 1 B) weist ein Koordinatensystem 28 mit einer X1-Koordinatenachse 30 und einer zu der X1-Koordinatenachse 30 rechtwinkeligen Y1-Koordinatenachse 32 auf und der erste Laserlicht-Sensor 18 ist dazu eingerichtet, die X1-Koordinate und Y1-Koordinate eines Laserlicht-Flecks 34 (vgl. auch Fig. 1 B) eines auf das erste Messfeld 20 auftreffenden Laserlichtstrahls in Form eines ersten Teilstrahls 44 auf dem ersten Messfeld 20 zu erfassen,

Das zweite Messfeld 24 (vgl. auch Fig. 1 B) weist ein Koordinatensystem 28 mit einer X2-Koordinatenachse 36 und einer zu der X2-Koordinatenachse 36 rechtwinkeligen Y2-Koordinatenachse 38 auf und der zweite Laserlicht-Sensor 22 ist dazu eingerichtet, die X2-Koordinate und Y2-Koordinate eines Laserlicht-Flecks 34 (vgl. auch Fig. 1 B) eines auf das zweite Messfeld 24 auftreffenden Laserlichtstrahls in Form eines zweiten Teilstrahls 46 auf dem zweiten Messfeld 24 zu erfassen.

Die die Y2-Koordinatenachse 38 des zweiten Messfelds 24 ist parallel zur Y1-Koordinatenachse 32 des ersten Messfelds 20 orientiert und die X2-Koordinatenachse 36 des zweiten Messfelds 24 ist parallel zur X1-Koordinatenachse 30 des ersten Messfelds 20 orientiert, so dass die beiden Messfelder 20, 24 also insgesamt gesehen eine parallele Ausrichtung zueinander aufweisen.

Der Strahlungsteiler 26 weist eine ebene Eintrittsfläche 40 und eine zu dieser parallele Austrittsfläche 42 auf und die Eintrittsfläche 40 ist parallel zur X1-Koordinatenachse 30 ausgerichtet

Der Strahlungsteiler 26 teilt einen durch eine Linse 96 auf die ebene Eintrittsfläche 40 auftreffenden Laserlichtstrahl 10 in einen ersten Teilstrahl 44, der den Strahlungsteiler 26 durchsetzt, und einen durch Reflexion eines Teils des Laserlichtstrahls 10 an der Eintrittsfläche 40 erzeugten zweiten Teilstrahl 46 auf.

Der sich von dem Strahlungsteiler 26 erstreckende vorgegebene optische Weg 48 des ersten Teilstrahls 44 und sich von dem Strahlungsteiler 26 erstreckende vorgegebene optische Weg 48 des zweiten Teilstrahls 46 sind derart ausgebildet bzw. sind derart, dass der erste Teilstrahl 44 auf das erste Messfeld 20 und der zweite Teilstrahl 46 auf das zweite Messfeld 24 auftrifft, wobei der optische Weg des zweiten Teilstrahls 46 mittels eines Umlenkmittels in Form eines Spiegels 98, der auch innerhalb des Gehäuses 104 angeordnet ist, wirksam verlängert wird, so dass der optische Weg 48 des ersten Teilstrahls 44 bis zu dem ersten Messfeld 20 kleiner bzw. kürzer ist als der optische Weg des zweiten Teilstrahls 46 bis zu dem zweiten Messfeld 24.

Ferner sind das erste und zweite Messfeld 20, 24 derart in Bezug auf den Strahlungsteiler 26 angeordnet, dass die Koordinaten eines Laserlicht-Flecks 34 eines parallel zu einer Normalen des ersten Messfelds 20 ausgerichteten ersten Teilstrahls 44 auf dem ersten Messfeld 20 den Koordinaten des Laserlicht-Flecks 34 des zweiten Teilstrahls 46 auf dem zweiten Messfeld 24 entsprechen. Auf diese Weise kann der Aufwand zu Ermitteln der Ausrichtung des Laserlichtstrahls 10 in Bezug auf die Drehachse 12 auf der Grundlage der erfassten Koordinaten und der für jede Drehstellung erfassten Drehwinkel wirksam reduziert werden.

Die Laserlicht-Erfassungseinrichtung 16 ist derart drehfest mit der Einrichtung 14 verbindbar ist, dass das erste Messfeld 20 entlang der Drehachse 12 von der Einrichtung 14 entfernt angeordnet ist und dass das zweite Messfeld 24 entlang einer zu der Drehachse 12 parallelen Geraden (nicht veranschaulicht) von der Einrichtung 14 entfernt bzw. beabstandet angeordnet ist und dass die X1- Koordinatenachse 30 und die Y1-Koordinatenachse 32 des ersten Messfelds 20 im wesentlichen rechtwinkelig zur Drehachse 12 der Einrichtung 14 orientiert bzw. ausgerichtet sind. Der Verbindungszustand ist in Fig. 1A durch zwei breite parallele Linien symbolisiert.

Die Laserlicht-Erfassungseinrichtung 16 weist ferner eine Auswerteeinheit 84 und eine Messeinrichtung 86 zum Messen eines Drehwinkels α (vgl. auch Fig. 1 C) auf.

Die Auswerteeinheit 84 ist dazu eingerichtet, die Ausrichtung des Laserlichtstrahls 10 in Bezug auf die Drehachse 12 der Einrichtung 14 auf der Grundlage von Y1-Koordinaten und Y2-Koordinaten oder X1-Koordinaten und X2-Koordinaten des Laserlicht-Flecks 34 des ersten und zweiten Teilstrahls 44, 46, die durch den ersten Laserlicht-Sensor 18 und den zweiten Laserlicht-Sensor 22 beim Drehen der Einrichtung 14 in einem vorgegebenen Drehsinn 51 um ein vorgegebenes Winkelmaß in wenigstens fünf verschiedenen Drehstellungen der Einrichtung 14 erfasst werden, und auf der Grundlage der durch die Messeinrichtung 86 messbaren Drehwinkel α, um welchen die Einrichtung 14 in jeder der verschiedenen Drehstellungen gegenüber einer Anfangs-Drehstellung 50 verdreht ist (vgl. auch Fig. 1C, dort ist die Anfangs-Drehstellung 50 durch einen Pfeil mit durchgezogener Linie symbolisiert), zu ermitteln. Zu Messen des Drehwinkels α weist die Messeinrichtung 86 ein nicht näher dargestelltes Inklinometer auf. Die Koordinaten werden zwecks Auswertung von dem ersten und zweiten Laserlicht-Sensor 18, 22 an die Auswerteinheit 84 in Form von digitalen und/oder analogen Signalen übermittelt. Ferner werden die Drehwinkel zwecks Auswertung von der Messeinrichtung 86 an die Auswerteinheit 84 in Form von digitalen und/oder analogen Signalen übermittelt.

Dass die Ausrichtung des Laserlichtstrahls 10 mittels der Laserlicht-Erfassungseinrichtung 16 auch dann zuverlässig ermittelt werden kann, wenn die beiden Messfelder 20, 24 derart drehfest mit der drehbaren Einrichtung 14 verbunden sind, dass die Messfelder 20, 24 in der oben dargelegten Weise von der drehbaren Einrichtung 14 entfernt bzw. beabstandet angeordnet sind, ist eine Folge, des Umstands, dass durch Vorsehen des Strahlungsteilers 26 und der mit diesem bereitgestellten ersten und zweiten Teilstrahl 44, 46 eine Laserlicht-Erfassungseinrichtung 16 bereitgestellt wird, die eine ähnliche Ausrichtungsermittlung ermöglicht wie bei einer z.B. aus der DE 39 11 307 A1 bekannten Anordnung, in welcher die beiden Messfelder20, 24 entlang einer zur Drehachse parallelen Geraden an der drehbaren Einrichtung aufeinanderfolgend angeordnet sind. Durch die Laserlicht-Erfassungseinrichtung 16 kann eine Mess-Anordnung (vgl. Fig. 2) realisiert werden, in welcher die beiden Messfelder 20, 24 entlang der Drehachse 12 an der Einrichtung 14 *virtuell* aufeinanderfolgend angeordnet sind.

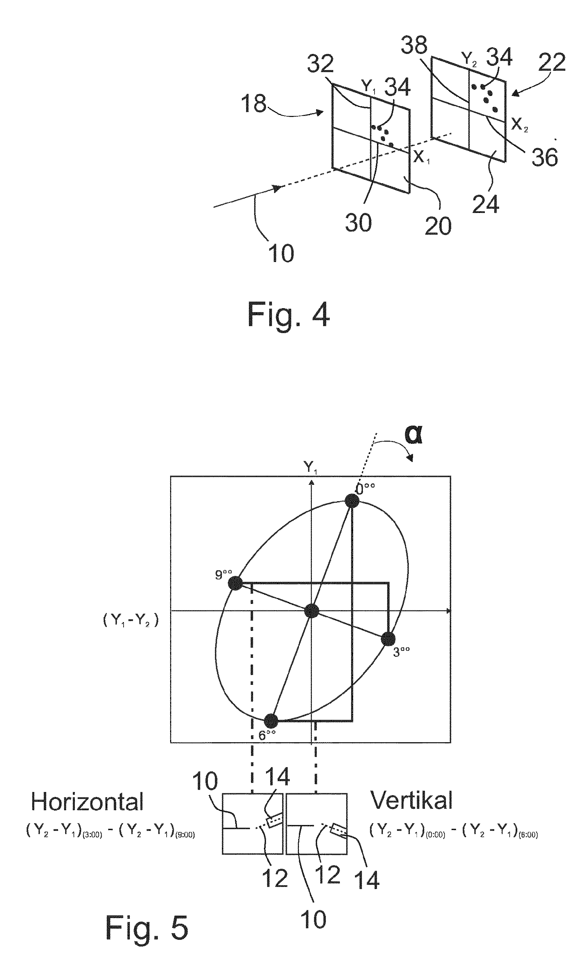

Ein Verfahren zum Ermitteln der Ausrichtung des Laserlichtstrahls 10 in Bezug auf die um die Drehachse 12 drehbare Einrichtung 14 in Form einer Walze (vgl. Fig. 1A) mittels der Laserlicht-Erfassungseinrichtung 16 umfasst die folgenden Schritte:
(A) Drehfestes Verbinden der Laserlicht-Erfassungseinrichtung 16 mit der Einrichtung 14, wobei die Laserlicht-Erfassungseinrichtung 16 derart drehfest mit der Einrichtung 14 verbunden wird, dass das erste Messfeld 20 entlang der Drehachse 12 von der Einrichtung 14 entfernt bzw. beabstandet angeordnet ist, dass das zweite Messfeld 24 entlang einer zu der Drehachse 12 parallelen Geraden von der Einrichtung 14 entfernt bzw. beabstandet angeordnet ist und dass die X1-Koordinatenachse 30 und die Y1-Koordinatenachse 32 des ersten Messfelds 20 im wesentlichen rechtwinkelig zur Drehachse 12 der Einrichtung 14 ausgerichtet sind,
(B) Bestrahlen der Eintrittsfläche 40 des Strahlungsteilers 26 mit dem Laserlichtstrahl 10, wobei während des Bestrahlens der Eintrittsfläche 40 die Einrichtung 14 ausgehend von der vorgegebenen Anfangs-Drehstellung 50 in einem vorgegebenen Drehsinn 51 (vgl. Fig. 1 C) um ein vorgegebenes Winkelmaß in Höhe von 90 Grad um die Drehachse 12 gedreht wird,
(C) Erfassen der X1-Koordinaten und Y1-Koordinaten des Laserlicht-Flecks 34 des ersten Teilstrahls 44 auf dem ersten Messfeld 20 und der X2-Koordinaten und Y2-Koordinaten des Laserlicht-Flecks 34 des zweiten Teilstrahls 46 auf dem zweiten Messfeld 24 (vgl. auch Fig. 4) in fünf verschiedenen Drehstellungen der Einrichtung 14, die beim Drehen gemäß Schritt B eingenommen werden, und Erfassen des Drehwinkels α, um welchen die Einrichtung 14 in jeder der verschiedenen Drehstellungen gegenüber der Anfangs-Drehstellung 50verdreht ist, und
(D) Ermitteln der Ausrichtung des Laserlichtstrahls 10 in Bezug auf die Drehachse 12 der Einrichtung 14 auf der Grundlage der für jede Drehstellung erfassten Drehwinkel α und der erfassten Y1-Koordinaten und Y2-Koordinaten.

In Schritt D erfolgt das Ermitteln der Ausrichtung des Laserlichtstrahls 10 in Bezug auf die Drehachse 12 der Einrichtung 10 auf der Grundlage der für jede Drehstellung erfassten Drehwinkel α und der erfassten Y1-Koordinaten und Y2-Koordinaten, wobei hierfür die Y1 Koordinaten in Abhängigkeit von dem gemessenen Drehwinkel α über der aus den Y1-Koordinaten und Y2-Koordinaten gebildeten Differenz Y1-Y2 - die ebenfalls in Abhängigkeit vom dem gemessenen Drehwinkel α dargestellt wird - aufgetragen werden und eine geschlossenen Bahnkurve in Form einer Ellipse durch Kurvenanpassung an die aufgetragenen Koordinaten ermittelt wird (vgl. Fig. 5). Mittels dieser ermittelten Bahnkurve kann dann die Ausrichtung des Laserlichtstrahls 10 in Bezug auf die Drehachse 12 in Form eines ggf. vorhandenen horizontalen und/oder vertikalen Winkelversatzes in der in Fig. 5 veranschaulichten Weise einfach ermittelt bzw. abgelesen werden. Zugrunde gelegt werden hierbei die Differenzen Y2- Y1 auf der Bahnkurve in der sogenannten 0-Uhr (0:00)-Position, der 3-Uhr (3:00)-Position, der 6-Uhr (6:00)-Position und der 9-Uhr (9:00)-Position, wobei es sich bei diesen Positionen letztlich um die von der Messeinrichtung 86 gemessenen Winkel α in Höhe von null Grad, 90 Grad, 180 Grad und 270 Grad relativ zur Schwerkraftrichtung handelt.

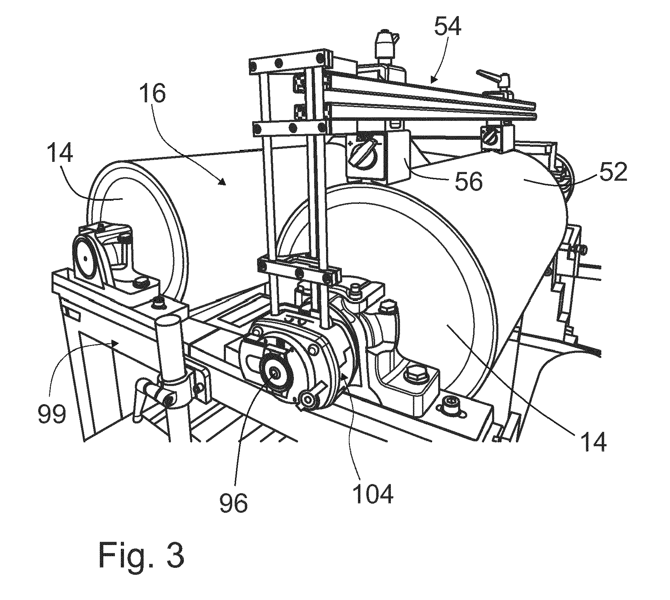

Die Fig. 3 zeigt eine schematische dreidimensionale Darstellung eines weiteren Ausführungsbeispiels einer Laserlicht-Erfassungseinrichtung 16 zusammen mit zwei rotierbaren bzw. drehbaren Einrichtungen 14 in Form von Walzen, die in einer Aufnahme 99 aufgenommen sind, wobei Laserlicht-Erfassungseinrichtung 16 in einem Zustand dargestellt ist, in welcher sie in der gemäß Schritt A des erfindungsgemäßen Verfahrens definierten Weise drehfest mit der rechten rotierbaren Einrichtung 14 verbunden ist.

Die Laserlicht-Erfassungseinrichtung 16 nach Fig. 3 zeichnet sich dadurch aus, dass die Laserlicht-Erfassungseinrichtung 16 zum Herstellen einer drehfesten Verbindung mit der Einrichtung 14 eine Halteeinrichtung 54 mit wenigstens einem magnetisch ausgebildeten Haltemittel 56 aufweist, so dass die Laserlicht-Erfassungseinrichtung 16 durch in Kontakt bringen des Haltemittels 56 mit der Mantelfläche 52 der Einrichtung 14 durch Magnetkraft drehfest verbindbar ist, wobei die Einrichtung 14 hierfür an der Mantelfläche 52 magnetisch ausgebildet ist.

Die Laserlicht-Erfassungseinrichtung 16 nach Fig. 3 umfasst ein Gehäuse104, in welchem die beiden Messfelder und der Strahlungsteiler angeordnet sind, wobei das Gehäuse 104 eine maximale Ausdehnung von ca. 100 mm aufweist.

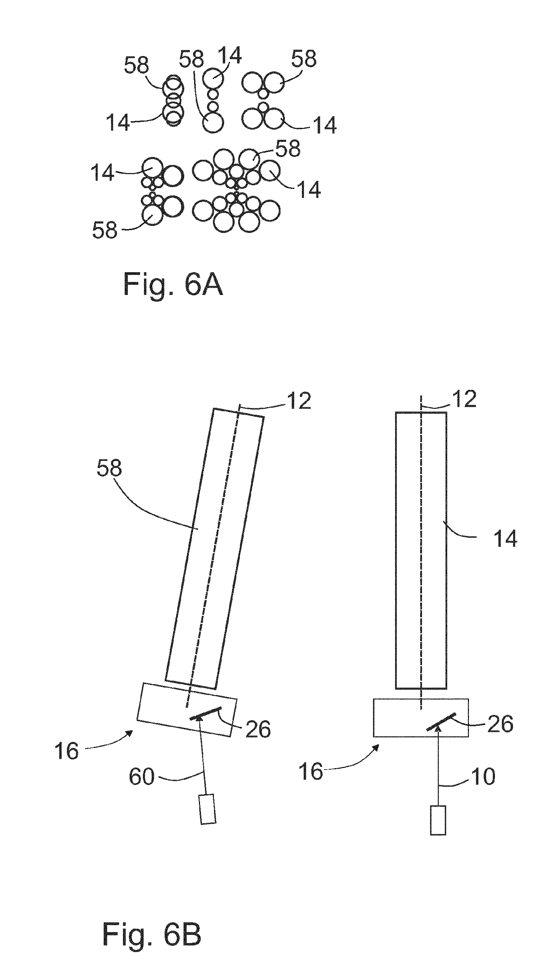

Die Fig. 6B dient der Veranschaulichung eines Verfahrens zum Ermitteln der Ausrichtung der Drehachsen 12 von zwei Einrichtungen 14 und 58 in Form von Walzen zueinander, die voneinander beabstandet und jeweils um eine Drehachse 12 rotierbar sind. Das nachfolgend beschriebene Verfahren ist selbstverständlich nicht auf zwei rotierbare bzw. drehbare Einrichtungen beschränkt und kann insbesondere zum Ermitteln der Ausrichtungen einer Vielzahl von Walzen zueinander verwendet werden, wie sie z.B. in typischen Walzanlagen (vgl. Fig. 6A) zum Einsatz kommen.

Das Verfahren umfasst die folgenden Schritte:
(I) Ermitteln der Ausrichtung der Drehachse 12 einer ersten Einrichtung 14 in Bezug auf einen ersten Laserlichtstrahl 10 mittels eines obigen Verfahrens unter Verwendung der Laserlicht-Erfassungseinrichtung 16 (hier nur sehr schematisch veranschaulicht, wobei in der Fig. 6B ferner jeweils der Zustand veranschaulicht ist, in welcher die Laserlicht-Erfassungseinrichtung 16 in der gemäß Schritt A definierten Wese drehfest mit der jeweiligen Einrichtung 14, 58 verbunden ist),
(II) Bereitstellen wenigstens eines zweiten Laserlichtstrahls 60, wobei sich die Lage des zweiten Laserlichtstrahls 60 von der des ersten Laserlichtstrahls 10 unterscheidet,
(III) Ermitteln der Ausrichtung der Drehachse 12 der zweiten Einrichtung 58 in Bezug auf den zweiten Laserlichtstrahl 60 mittels eines obigen Verfahrens unter Verwendung der Laserlicht-Erfassungseinrichtung 16,
(IV) Ermitteln der Ausrichtung des zweiten Laserlichtstrahls 60 relativ zu dem ersten Laserlichtstrahl 10, und
(V) Ermitteln der Ausrichtung der Drehachse 12 der zweiten Einrichtung 58 in Bezug auf den ersten Laserlichtstrahl 10 auf der Grundlage der in Schritt IV ermittelten Ausrichtung und der in Schritt III ermittelten Ausrichtung und Ermitteln der Ausrichtung der Drehachse 12 der ersten Einrichtung 14 in Bezug auf die Drehachse 12 der zweiten Einrichtung 58 auf der Grundlage der ermittelten Ausrichtung der Drehachse 12 der zweiten Einrichtung 58 in Bezug auf den ersten Laserlichtstrahl 10 und der Schritt I ermittelten Ausrichtung.

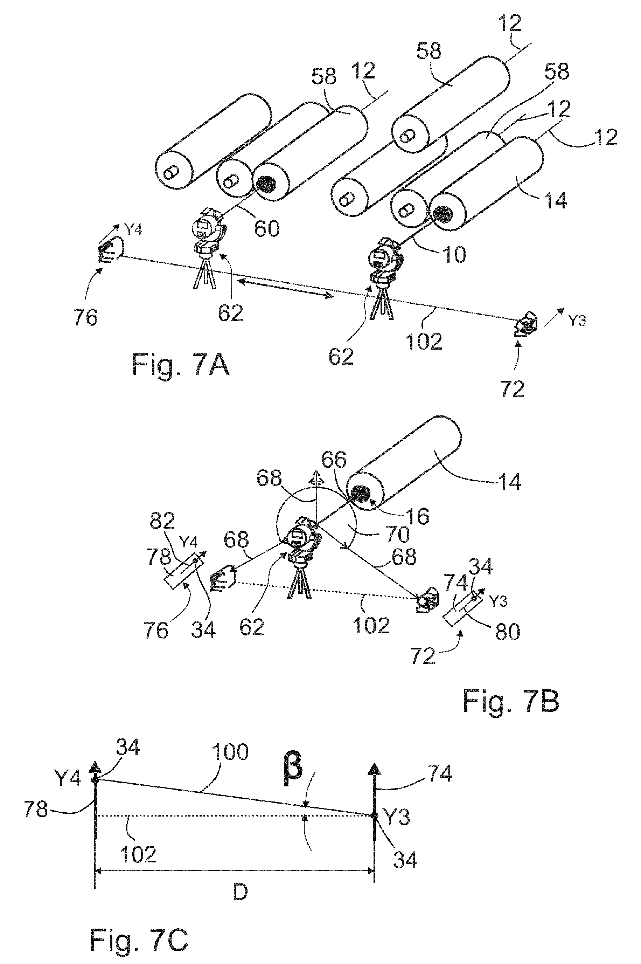

Bei einem nachfolgend beschriebenen weiteren Ausführungsbeispiels des erfindungsgemäßen Verfahrens zum Ermitteln der Ausrichtung der Drehachsen von mehreren Einrichtungen 14, 58 in Form von rotierbaren Walzen zueinander (vgl. Fig. 7A) werden der erste Laserlichtstrahl 10 und mehrere zweite Laserlichtstrahlen 60 von ein und derselben Laserlichtquelle 62 erzeugt, wobei zum Bereitstellen der sich in ihrer Lage voneinander unterscheidenden Laserlichtstrahlen 10 und 60 die Lage der Laserlichtquelle 62, wie in Fig. 7A veranschaulicht, verändert wird.

Bei dem Verfahren teilt die Laserlichtquelle 62 einen horizontal ausgerichteten Laserlicht-Grundstrahl (nicht veranschaulicht) in an sich bekannter Weise in einen horizontal ausgerichteten Teilstahl 66 und einen weiteren Teilstrahl 68 auf (vgl. Fig. 7B), der zu dem horizontal ausgerichteten Teilstrahl 66 rechtwinkelig ausgerichtet ist.

Die Laserlichtquelle 62 ist ferner dazu eingerichtet ist, den weiteren Teilstrahl 68 in einer sich vertikal erstreckenden Ebene 70 zu rotieren. Bei dem ersten Laserlichtstahl 10 und den zweiten Laserlichtstrahlen 60, deren Ausrichtung zu den Walzen 14 bzw. 58 verfahrensgemäß ermittelt wird, handelt es sich jeweils um einen dieser horizontal ausgerichteten Teilstrahlen 66 bzw. die Laserlichtstrahlen 10, 60 sind mit diesen Teilstrahlen 66 der Laserlichtquelle 62 identisch.

Vor Schritt I werden ein dritter Laserlicht-Sensor 72 mit einem dritten ebenen Messfeld 74 und ein vierter Laserlicht-Sensor 76 mit einem vierten ebenen Messfeld 78 mit einem vorgegebenen Abstand der Messfelder 74 und 78 zueinander in vorgegebenen Positionen angeordnet (vgl. Fig. 7A und 7B, die an den Laserlicht-Sensoren 72 und 76 vorgesehenen Messfelder 74 und 78 sind zur Veranschaulichung neben den Laserlicht-Sensoren 72 und 76 nochmals vergrößert dargestellt).

Das dritte Messfeld 74 weist eine Y3-Koordinatenachse 80 und das vierte Messfeld 78 weist eine Y4-Koordinatenachse 82 auf. Das dritte und das vierte Messfeld 74 und 78 werden in den vorgegebenen Positionen derart angeordnet, dass die Y3-Koordinatenachse 80 und Y4-Koordinatenachse 82 parallel zueinander sind und sich horizontal erstrecken.

Die Positionen des dritten und vierten Messfelds 74 und 78 werden derart gewählt, dass in den Schritten I und III der in der vertikalen Ebene 70 rotierbare weitere Teilstrahl 68 auf das dritte und das vierte Messfeld 74 und 78 auftreffen kann.

In Schritt IV wird zum Ermitteln der Ausrichtung jedes der zweiten Laserlichtstrahlen 60 relativ zu dem ersten Laserlichtstrahl 10 in den Schritten I und III jeweils zusätzlich die Y3-Koordinate wenigstens eines Laserlicht-Flecks 34 wenigstens eines auf das dritte Messfeld 74 auftreffenden weiteren Teilstrahls 68 durch den dritten Laserlicht-Sensor 72 erfasst und die Y4-Koordinate wenigstens eines Laserlicht-Flecks 34 wenigstens eines auf das vierte Messfeld 78 auftreffenden weiteren Teilstrahls 68 durch den vierten Laserlicht-Sensor 78 erfasst und auf der Grundlage der jeweiligen Y3-Koordinate und der Y4-Koordinate die Ausrichtung jedes zweiten Laserlichtstrahls 60 relativ zu dem ersten Laserlichtstrahl 10 ermittelt.

Da der Abstand des dritten Messfelds 74 zu dem vierten Messfeld 78 als vorgegebener Abstand D (vgl. Fig. 7C) bekannt ist und der weitere Teilstahl 68 rechtwinkelig zu dem jeweils in Form des horizontal ausgerichteten Teilstrahls 66 ausgebildeten ersten bzw. zweiten Laserlichtstrahl 10, 60 ist, kann auf der Grundlage einfacher geometrischer Zusammenhänge, z.B. auch über die Tangens-Funktion die Ausrichtung jedes zweiten Laserlichtstrahls 60 relativ zu dem ersten Laserlichtstrahl 10 ermittelt werden. Hierfür ist in jeder während des Verfahrens von der Laserlichtquelle 62 eingenommenen Position bzw. Lage lediglich die Differenz Y3-Y4 ins Verhältnis zu dem Abstand D zu setzen, um auf der Grundlage der Tangensfunktion den Winkel β (vgl. Fig. 7C) zu ermitteln, um welchen eine den Laserlicht-Fleck 34 auf dem dritten Messfeld 74 mit dem Laserlicht-Fleck 34 auf dem vierten Messfeld 78 verbindende Verbindungsgerade 100 gegenüber einer Risslinie 102 (vgl. auch Fig. 7A und B) geneigt ist, entlang derer die Messfelder 74 und 78 aufeinanderfolgend mit dem vorgegeben Abstand D zueinander angeordnet sind. Diese Ermittlung wird in den Schritten I und III für den ersten Laserlichtstrahl 10 und jeden zweiten Laserlichtstrahl 60 bzw. für jede während des Verfahrens von der Laserlichtquelle 62 eingenommenen Position bzw. Lage vorgenommen, um auf der Grundlage der ermittelten Neigungswinkel β die Ausrichtung jedes der zweiten Laserlichtstrahlen 60 relativ zu dem ersten Laserlichtstrahl 10 zu ermitteln.

Dies ist einfach möglich, da die Risslinie 102 eine räumlich feste Bezugsgerade ist, so dass auf der Grundlage der Neigungswinkel β zu dieser Bezugsgeraden unmittelbar auch die Ausrichtung jedes der zweiten Laserlichtstrahlen 60 relativ zu dem ersten Laserlichtstrahl 10 ermittelt bzw. bestimmt werden kann.

### Bezugszeichenliste

- 10: Laserlichtstrahl
- 12: Drehachse
- 14: Einrichtung
- 16: Laserlicht-Erfassungseinrichtung
- 18: erster Laserlicht-Sensor
- 20: erstes ebenes Messfeld
- 22: zweiter Laserlicht-Sensor
- 24: zweites ebenes Messfeld
- 26: Strahlungsteiler
- 28: Koordinatensystem
- 30: X1-Koordiantenachse
- 32: Y1-Koordinatenachse
- 34: Laserlicht-Fleck
- 36: X2-Koordinatenachse
- 38: Y2-Koordinatenachse
- 40: Eintrittsfläche
- 42: Austrittsfläche
- 44: erster Teilstrahl
- 46: zweier Teilstrahl
- 48: optischer Weg
- 50: Anfangs-Drehstellung
- 51: Drehsinn
- 52: Mantelfläche
- 54: Halteeinrichtung
- 56: Haltemittel
- 58: Einrichtung
- 60: Laserlichtstrahl
- 62: Laserlichtquelle
- 66: horizontaler Teilstrahl
- 68: weiterer Teilstrahl
- 70: vertikale Ebene
- 72: dritter Laserlicht-Sensor
- 74: drittes ebenes Messfeld
- 76: vierter Laserlicht-Sensor
- 78: viertes ebenes Messfeld
- 80: Y3-Koordinatenachse
- 82: Y4-Koordinatenachse
- 84: Auswerteinheit
- 86: Messeinrichtung
- 96: Linse
- 98: Spiegel
- 99: Aufnahme
- 100: Verbindungsgerade
- 102: Risslinie
- 104: Gehäuse

## Patentansprüche

1. Verfahren zum Ermitteln der Ausrichtung eines Laserlichtstrahls (10) in Bezug auf eine Drehachse (12) einer Einrichtung (14), die um die Drehachse (12) rotierbar ist, wobei die Ausrichtung mittels einer Laserlicht-Erfassungseinrichtung (16) ermittelt wird,
wobei die Laserlicht-Erfassungseinrichtung (16) einen ersten Laserlicht-Sensor (18) mit einem ersten ebenen Messfeld (20), einen zweiten Laserlicht-Sensor (22) mit einem zweiten ebenen Messfeld (24) und einen Strahlungsteiler (26) umfasst,
wobei das erste Messfeld (20) ein Koordinatensystem (28) mit einer X1-Koordinatenachse (30) und einer zu der X1-Koordinatenachse (30) rechtwinkeligen Y1-Koordinatenachse (32) aufweist, wobei der erste Laserlicht-Sensor (18) dazu eingerichtet ist, die X1-Koordinate und Y1-Koordinate eines Laserlicht-Flecks (34) eines auf das erste Messfeld (20) auftreffenden Laserlichtstrahls (44) auf dem ersten Messfeld (20) zu erfassen,
wobei das zweite Messfeld (24) ein Koordinatensystem mit einer X2-Koordinatenachse (36) und einer zu der X2-Koordinatenachse (36) rechtwinkeligen Y2-Koordinatenachse (38) aufweist, wobei der zweite Laserlicht-Sensor (22) dazu eingerichtet ist, die X2-Koordinate und Y2-Koordinate eines Laserlicht-Flecks (34) eines auf das zweite Messfeld (24) auftreffenden Laserlichtstrahls (46) auf dem zweiten Messfeld (24) zu erfassen,
wobei die Y2-Koordinatenachse (38) des zweiten Messfelds (24) parallel zur Y1-Koordinatenachse (32) des ersten Messfelds (20) ausgerichtet und/oder
wobei die X2-Koordinatenachse (36) des zweiten Messfelds (24) parallel zur X1-Koordinatenachse (30) des ersten Messfelds (20) ausgerichtet ist,
wobei der Strahlungsteiler (26) eine ebene Eintrittsfläche (40) und eine zu dieser parallele Austrittsfläche (42) aufweist, wobei die Eintrittsfläche (40) parallel zur Y1-Koordinatenachse (32) oder X1-Koordinatenachse (30) ausgerichtet ist,
wobei der Strahlungsteiler (26) einen auf die ebene Eintrittsfläche (40) auftreffenden Laserlichtstrahl (10) in einen ersten Teilstrahl (44), der den Strahlungsteiler (26) durchsetzt, und einen durch Reflexion eines Teils des Laserlichtstrahls (10) an der Eintrittsfläche (40) erzeugten zweiten Teilstrahl (46) aufteilt,
wobei der sich von dem Strahlungsteiler (26) erstreckende optische Weg (48) des ersten Teilstrahls (44) und des zweiten Teilstrahls (46) derart ausgebildet sind, dass der erste Teilstrahl (44) auf das erste Messfeld (20) und der zweite Teilstrahl (46) auf das zweite Messfeld (24) auftrifft und dass der optische Weg (48) des ersten Teilstrahls (44) bis zu dem ersten Messfeld (20) kleiner ist als der optische Weg (48) des zweiten Teilstrahls (46) bis zu dem zweiten Messfeld (24),
wobei das Verfahren die folgenden Schritte umfasst:
(A) Drehfestes Verbinden der Laserlicht-Erfassungseinrichtung (16) mit der Einrichtung (14), wobei die Laserlicht-Erfassungseinrichtung (16) derart drehfest mit der Einrichtung (14) verbunden wird, dass das erste Messfeld (20) entlang der Drehachse (12) oder entlang einer zu dieser parallelen Geraden von der Einrichtung (14) entfernt angeordnet ist, dass das zweite Messfeld (24) entlang der Drehachse (12) oder entlang einer zu dieser parallelen Geraden von der Einrichtung (14) entfernt angeordnet ist und dass die X1-Koordinatenachse (30) und die Y1-Koordinatenachse (32) des ersten Messfelds (20) im wesentlichen rechtwinkelig zur Drehachse (12) der Einrichtung (14) ausgerichtet sind,
(B) Bestrahlen der Eintrittsfläche (40) des Strahlungsteilers (26) mit dem Laserlichtstrahl (10), wobei während des Bestrahlens der Eintrittsfläche (40) die Einrichtung (14) ausgehend von einer vorgegebenen Anfangs-Drehstellung (50) in einem vorgegebenen Drehsinn (51) um ein vorgegebenes Winkelmaß um die Drehachse (12) gedreht wird,
(C) Erfassen der X1-Koordinaten und Y1-Koordinaten des Laserlicht-Flecks (34) des ersten Teilstrahls (44) auf dem ersten Messfeld (20) und der X2-Koordinaten und Y2-Koordinaten des Laserlicht-Flecks (34) des zweiten Teilstrahls (46) auf dem zweiten Messfeld (24) in wenigstens fünf verschiedenen Drehstellungen der Einrichtung (14), die beim Drehen gemäß Schritt (B) eingenommen werden, und Erfassen des Drehwinkels, um welchen die Einrichtung (14) in jeder der verschiedenen Drehstellungen gegenüber der Anfangs-Drehstellung (50) verdreht ist, und
(D) Ermitteln der Ausrichtung des Laserlichtstrahls (10) in Bezug auf die Drehachse (12) der Einrichtung (14) auf der Grundlage der für jede Drehstellung erfassten Drehwinkel und der erfassten Y1-Koordinaten und Y2-Koordinaten oder auf der Grundlage der für jede Drehstellung erfassten Drehwinkel und der erfassten X1-Koordinaten und X2-Koordinaten.

2. Verfahren nach Anspruch 1, **dadurch gekennzeichnet, dass** die Einrichtung (14) eine Walze oder eine Welle ist, wobei die Walze oder die Welle an einer Stirnseite eine Gewindebohrung aufweist, und wobei zum drehfesten Verbinden gemäß Schritt (A) über die Gewindebohrung eine Schraubverbindung zwischen der Laserlicht-Erfassungseinrichtung (16) und der Walze oder der Welle hergestellt wird.

3. Verfahren nach Anspruch 1, **dadurch gekennzeichnet, dass** die Einrichtung (14) eine Walze oder eine Welle ist, wobei die Walze oder die Welle wenigstens an der Mantelfläche (52) wenigstens bereichsweise magnetisch ausgebildet ist, wobei zum drehfesten Verbinden gemäß Schritt (A) die Laserlicht-Erfassungseinrichtung (16) eine Halteeinrichtung (54) mit wenigstens einem magnetisch ausgebildeten Haltemittel (56) aufweist und die Halteeinrichtung (54) durch in Kontakt bringen des Haltemittels (56) mit der Mantelfläche (52) der Walze oder Welle durch Magnetkraft drehfest verbunden wird.

4. Verfahren zum Ermitteln der Ausrichtung der Drehachsen (12) von mehreren Einrichtungen (14, 58) zueinander, die voneinander beabstandet und jeweils um eine Drehachse (12) rotierbar sind, wobei das Verfahren die folgenden Schritte umfasst:
(I) Ermitteln der Ausrichtung der Drehachse (12) einer ersten Einrichtung (14) in Bezug auf einen ersten Laserlichtstrahl (10) mittels eines Verfahrens nach einem der Ansprüche 1 bis 3,
(II) Bereitstellen wenigstens eines zweiten Laserlichtstrahls (60), wobei sich die Lage des zweiten Laserlichtstrahls (60) von der des ersten Laserlichtstrahls (10) unterscheidet,
(III) Ermitteln der Ausrichtung der Drehachse (12) wenigstens einer zweiten Einrichtung (58) in Bezug auf den zweiten Laserlichtstrahl (60) mittels eines Verfahrens nach einem der Ansprüche 1 bis 3,
(IV) Ermitteln der Ausrichtung des zweiten Laserlichtstrahls (60) relativ zu dem ersten Laserlichtstrahl (10), und
(V) Ermitteln der Ausrichtung der Drehachse (12) der zweiten Einrichtung (58) in Bezug auf den ersten Laserlichtstrahl (10) auf der Grundlage der in Schritt (IV) ermittelten Ausrichtung und der in Schritt (III) ermittelten Ausrichtung und Ermitteln der Ausrichtung der Drehachse (12) der ersten Einrichtung (14) in Bezug auf die Drehachse (12) der zweiten Einrichtung (58) auf der Grundlage der ermittelten Ausrichtung der Drehachse (12) der zweiten Einrichtung (58) in Bezug auf den ersten Laserlichtstrahl (10) und der Schritt (I) ermittelten Ausrichtung.

5. Verfahren nach Anspruch 4, **dadurch gekennzeichnet, dass** der erste und der zweite Laserlichtstrahl (10, 60) von ein und derselben Laserlichtquelle (62) erzeugt werden, wobei zum Bereitstellen der sich in ihrer Lage voneinander unterscheidenden Laserlichtstrahlen (10, 60) die Lage der Laserlichtquelle (62) und/oder die Abstrahlrichtung der Laserlichtquelle (62) verändert wird.

6. Verfahren nach Anspruch 5, **dadurch gekennzeichnet, dass** die Laserlichtquelle (62) einen horizontal ausgerichteten Laserlicht-Grundstrahl in einen horizontal ausgerichteten Teilstrahl (66) und einen weiteren Teilstrahl (68) aufteilt, der zu dem horizontal ausgerichteten Teilstrahl (66) rechtwinkelig ausgerichtet ist, wobei die Laserlichtquelle (62) ferner dazu eingerichtet ist, den weiteren Teilstrahl (68) in einer sich vertikal erstreckenden Ebene (70) zu rotieren, wobei der erste Laserlichtstahl (10) und der zweite Laserlichtstrahl (60) horizontal ausgerichtete Teilstrahlen (66) der Laserlichtquelle (62) sind,
wobei vor Schritt (I) ein dritter Laserlicht-Sensor (72) mit einem dritten ebenen Messfeld (74) und ein vierter Laserlicht-Sensor (76) mit einem vierten ebenen Messfeld (78) mit einem vorgegebenen Abstand der Messfelder (74, 76) zueinander in vorgegebenen Positionen angeordnet werden, wobei das dritte Messfeld (74) eine Y3-Koordinatenachse (80) und das vierte Messfeld (78) eine Y4-Koordinatenachse (82) aufweist,
wobei das dritte und das vierte Messfeld (74, 78) in den vorgegebenen Positionen derart angeordnet werden, dass die Y3-Koordinatenachse (80) und Y4-Koordinatenachse (82) parallel zueinander sind und sich horizontal erstrecken, wobei die Positionen des dritten und vierten Messfelds (74, 78) ferner derart gewählt werden, dass in den Schritten (I) und (III) der in der vertikalen Ebene (70) rotierbare weitere Teilstrahl (68) auf das dritte und das vierte Messfeld (74, 78) auftreffen kann, und
wobei in Schritt (IV) zum Ermitteln der Ausrichtung des zweiten Laserlichtstrahls (60) relativ zu dem ersten Laserlichtstrahl (10) in den Schritten (I) und (III) zusätzlich die Y3-Koordinaten und Y4-Koordinaten wenigstens eines Laserlicht-Flecks (34) des auf das dritte und vierte Messfeld (74, 78) auftreffenden weiteren Teilstrahls (68) erfasst werden und auf deren Grundlage die Ausrichtung des zweiten Laserlichtstrahls (60) relativ zu dem ersten Laserlichtstrahl (10) ermittelt wird.

7. Laserlicht-Erfassungseinrichtung (16) zum Ermitteln der Ausrichtung eines Laserlichtstrahls (10) in Bezug auf eine Drehachse (12) einer Einrichtung (14), die um die Drehachse (12) rotierbar ist,
wobei die Laserlicht-Erfassungseinrichtung (16) einen ersten Laserlicht-Sensor (18) mit einem ersten ebenen Messfeld (20), einen zweiten Laserlicht-Sensor (22) mit einem zweiten ebenen Messfeld (24) und einen Strahlungsteiler (26) umfasst,
wobei das erste Messfeld (20) ein Koordinatensystem (28) mit einer X1-Koordinatenachse (30) und einer zu der X1-Koordinatenachse (30) rechtwinkeligen Y1-Koordinatenachse (32) aufweist, wobei der erste Laserlicht-Sensor (18) dazu eingerichtet ist, die X1-Koordinate und Y1-Koordinate eines Laserlicht-Flecks (34) eines auf das erste Messfeld (20) auftreffenden Laserlichtstrahls (44) auf dem ersten Messfeld (20) zu erfassen,
wobei das zweite Messfeld (24) ein Koordinatensystem (28) mit einer X2-Koordinatenachse (36) und einer zu der X2-Koordinatenachse (36) rechtwinkeligen Y2-Koordinatenachse (38) aufweist, wobei der zweite Laserlicht-Sensor (22) dazu eingerichtet ist, die X2-Koordinate und Y2-Koordinate eines Laserlicht-Flecks (34) eines auf das zweite Messfeld (24) auftreffenden Laserlichtstrahls (46) auf dem zweiten Messfeld (24) zu erfassen,
wobei die Y2-Koordinatenachse (38) des zweiten Messfelds (24) parallel zur Y1-Koordinatenachse (32) des ersten Messfelds (20) orientiert ist und/oder
wobei die X2-Koordinatenachse (36) des zweiten Messfelds (24) parallel zur X1-Koordinatenachse (30) des ersten Messfelds (20) orientiert ist,
wobei der Strahlungsteiler (26) eine ebene Eintrittsfläche (40) und eine zu dieser parallele Austrittsfläche (42) aufweist, wobei die Eintrittsfläche (40) parallel zur Y1-Koordinatenachse (32) oder X1-Koordinatenachse ausgerichtet ist,
wobei der Strahlungsteiler (26) einen auf die ebene Eintrittsfläche (40) auftreffenden Laserlichtstrahl (10) in einen ersten Teilstrahl (44), der den Strahlungsteiler (26) durchsetzt, und einen durch Reflexion eines Teils des Laserlichtstrahls (10) an der Eintrittsfläche (40) erzeugten zweiten Teilstrahl (46) aufteilt,
wobei der sich von dem Strahlungsteiler (26) erstreckende optische Weg (48) des ersten Teilstrahls (44) und des zweiten Teilstrahls (46) derart ausgebildet sind, dass der erste Teilstrahl (44) auf das erste Messfeld (20) und der zweite Teilstrahl (46) auf das zweite Messfeld (24) auftrifft und dass der optische Weg (48) des ersten Teilstrahls (44) bis zu dem ersten Messfeld (20) kleiner ist als der optische Weg des zweiten Teilstrahls (46) bis zu dem zweiten Messfeld (24),
wobei die Laserlicht-Erfassungseinrichtung (16) derart drehfest mit der Einrichtung (14) verbindbar ist, dass das erste Messfeld (20) entlang der Drehachse (12) oder entlang einer zu dieser parallelen Geraden von der Einrichtung (14) entfernt angeordnet ist, dass das zweite Messfeld (24) entlang der Drehachse (12) oder einer entlang einer zu dieser parallelen Geraden von der Einrichtung (14) entfernt angeordnet ist und dass die X1- Koordinatenachse (30) und die Y1-Koordinatenachse (32) des ersten Messfelds (20) im wesentlichen rechtwinkelig zur Drehachse (12) der Einrichtung (14) ausgerichtet sind,
wobei die Laserlicht-Erfassungseinrichtung (16) ferner eine Auswerteeinheit (84) und eine Messeinrichtung (86) zum Messen eines Drehwinkels aufweist,
wobei die Auswerteeinheit (84) dazu eingerichtet ist, die Ausrichtung des Laserlichtstrahls (10) in Bezug auf die Drehachse (12) der Einrichtung (14) auf der Grundlage von Y1-Koordinaten und Y2-Koordinaten oder X1-Koordinaten und X2-Koordinaten des Laserlicht-Flecks (34) des ersten und zweiten Teilstrahls (44, 46), die durch den ersten Laserlicht-Sensor (18) und den zweiten Laserlicht-Sensor (22) beim Drehen der Einrichtung (14) in einem vorgegebenen Drehsinn (51) um ein vorgegebenes Winkelmaß in wenigstens fünf verschiedenen Drehstellungen der Einrichtung (14) erfasst werden, und
auf der Grundlage der durch die Messeinrichtung (86) messbaren Drehwinkel, um welchen die Einrichtung (14) in jeder der verschiedenen Drehstellungen gegenüber einer Anfangs-Drehstellung (50) verdreht ist, zu ermitteln.

8. Laserlicht-Erfassungseinrichtung (16) nach Anspruch 7, **dadurch gekennzeichnet, dass** die die Laserlicht-Erfassungseinrichtung (16) zum Herstellen einer drehfesten Verbindung mit einer in Form einer Welle oder einer Walze ausgebildeten Einrichtung (14) dazu eingerichtet ist, eine Schraubverbindung zwischen der Laserlicht-Erfassungseinrichtung (16) und der Einrichtung (14) über eine Gewindebohrung, die an einer Stirnseite der Einrichtung (14) vorgesehen ist, herzustellen.

9. Laserlicht-Erfassungseinrichtung (16) nach Anspruch 7, **dadurch gekennzeichnet, dass** die Laserlicht-Erfassungseinrichtung (16) zum Herstellen einer drehfesten Verbindung mit der Einrichtung (14) eine Halteeinrichtung (54) mit wenigstens einem magnetisch ausgebildeten Haltemittel (56) aufweist, so dass die Laserlicht-Erfassungseinrichtung (16) durch in Kontakt bringen des Haltemittels (56) mit der Mantelfläche (52) einer in Form einer Walze oder einer Welle ausgebildeten Einrichtung (14) durch Magnetkraft drehfest verbindbar ist, wenn die um die Drehachse (12) rotierbare Einrichtung (14) an der Mantelfläche (52) wenigstens bereichsweise magnetisch ausgebildet ist.
